# EUROPÄISCHE PATENTSCHRIFT

(11) **EP 2 766 913 B1**
(45) Veröffentlichungstag und Bekanntmachung des Hinweises auf die Patenterteilung: **13.04.2016**
(21) Anmeldenummer: 12761940.1
(22) Anmeldetag: 14.09.2012
(51) Int. Cl.: H01H 9/02, H01H 23/08, H01H 23/14

(54) **SCHALTMODUL FÜR EINEN SCHALTER, SCHALTER, VERFAHREN ZUM ANZEIGEN EINER BETÄTIGUNG EINES SCHALTERS UND VERFAHREN ZUM STEUERN EINER VORRICHTUNG**
SWITCHING MODULE FOR A SWITCH, SWITCH, METHOD FOR INDICATING ACTUATION OF A SWITCH AND METHOD FOR CONTROLLING AN APPARATUS
MODULE DE COMMUTATION POUR COMMUTATEUR, COMMUTATEUR, PROCÉDÉ PERMETTANT D'AFFICHER UN ACTIONNEMENT D'UN COMMUTATEUR ET PROCÉDÉ PERMETTANT DE COMMANDER UN DISPOSITIF

(30) Priorität: 13.10.2011 DE 102011084407
(43) Veröffentlichungstag der Anmeldung: 20.08.2014
(73) Patentinhaber: ZF Friedrichshafen AG, 88038 Friedrichshafen (DE)
(72) Erfinder: RUFF, Eduard, 91275 Auerbach (DE)
(86) Internationale Anmeldenummer: PCT/EP2012/068018
(87) Internationale Veröffentlichungsnummer: WO 2013/053565

(56) Entgegenhaltungen:
- WO-A2-2004/034560
- FR-A1- 2 934 708
- US-A1- 2010 308 664

## Beschreibung

Die vorliegende Erfindung bezieht sich auf ein Schaltmodul für einen Schalter, auf einen Schalter, auf ein Verfahren zum Anzeigen einer Betätigung eines Schalters und auf ein Verfahren zum Steuern einer Vorrichtung mittels eines Schaltsignals eines Schalters, bei dem es sich um einen autarken Funktaster handeln kann.

Die DE 20 2004 005 837 U1 beschreibt ein Schaltergehäuse für eine Aufputzmontage zur Aufnahme eines elektronischen Schaltmoduls. Das Schaltmodul ist so konzipiert, dass eine Betätigung auf je einen von zwei beweglichen Hebeln eingeleitet wird, welche einen elektromagnetischen Energiewandler aktivieren.

"WO 2004/034560 A2" offenbart ein Schaltmodul für einen Schalter, mit folgenden Merkmalen:
eine Wippe, die ausgebildet ist, um bei einer Betätigung des Schalters eine Schaltbewegung auszuführen;
einem Betätiger, der an der Wippe angeordnet ist, um bei der Schaltbewegung der Wippe eine durch eine Steuerkontur steuerbare Betätigungsbewegung auszuführen;
einem Energiewandler, der an der Wippe angeordnet ist, um angetrieben durch die Betätigungsbewegung des Betätigers einen elektrischen Impuls bereitzustellen; und
einer Schalteinheit zur Ausgabe eines auf dem elektrischen Impuls basierenden Schaltsignals zur Anzeige der Schaltbewegung der Wippe.

Vor diesem Hintergrund schafft die vorliegende Erfindung ein verbessertes Schaltmodul für einen Schalter, einen verbesserten Schalter, ein verbessertes Verfahren zum Anzeigen einer Betätigung eines Schalters und ein verbessertes Verfahren zum Steuern einer Vorrichtung mittels eines Schaltsignals eines Schalters, gemäß den Hauptansprüchen. Vorteilhafte Ausgestaltungen ergeben sich aus den Unteransprüchen und der nachfolgenden Beschreibung.

Mittels des Schaltmoduls kann eine Betätigung des Schalters erfasst und angezeigt werden. Dazu kann das Schaltmodul so in den Schalter integriert sein, dass zumindest ein Anteil der zur Betätigung des Schalters auf den Schalter einwirkenden mechanischen Energie auf das Schaltmodul übertragen wird und von dem Schaltmodul in elektrische Energie umgewandelt wird. Das Schaltmodul kann ferner ausgebildet sein, um die elektrische Energie zur Erzeugung eines elektrischen Schaltsignals zur Anzeige der Betätigung des Schaltmoduls und somit zur Anzeige der Betätigung des Schalters zu verwenden und das Schaltsignal über eine Sendeschnittstelle auszugeben. Die Sendeschnittstelle kann ausgebildet sein, um das Schaltsignal drahtlos von dem Schaltmodul oder von dem Schalter zu einem von dem Schalter entfernt angeordneten Empfänger zu übertragen. Das Schaltmodul kann dabei so in den Schalter integriert sein, dass das Schaltmodul bei einer Betätigung einer Betätigungstaste des Schalters mitbewegt wird. Ist der Schalter so konzipiert, dass die Taste des Schalters zur Betätigung des Schalters relativ zu einem Grundkörper des Schalters bewegt wird, so kann das Schaltmodul so angeordnet sein, dass es zusammen mit der Taste relativ zu dem Grundkörper bewegt wird. Wird das Schaltmodul synchron oder teilsynchron mit der Taste bewegt, so ist es nicht erforderlich einen gewissen Freiraum unter der Taste vorzusehen, um eine Kollision zwischen dem Schaltmodul und der Taste bei einer Kippbewegung der Taste zu vermeiden.

Gemäß einer Ausführungsform ist eine Elektronik des Schaltmoduls ausgebildet, um Funksignale nach außen zu versenden und völlig autark zu funktionieren. Daher kann die Elektronik in ein bewegliches Oberteil des Schaltmodules platziert werden. Dies führt dazu, dass die gesamte Elektromechanik des Schalmoduls bei der Betätigung des Schalters die Kippbewegung mit der Taste des Schalters mitmacht. Dies bringt einen entscheidenden Vorteil in der Bauhöhe des Schalters, beispielsweise eines Lichtschalters. Die Taste des Schalters kann direkt auf einen Deckel des Schaltmodules oder mit Hilfe eines Adapterrahmens an dem Schaltmodul befestigt werden.

Gemäß einer Ausführungsform kann die Taste des Schalters mit einem gewissen Spiel gegenüber dem Schaltmodul befestigt sein. Das Schaltmodul oder der Schalter können mehrere Schaltoptionen bereitstellen, zwischen denen durch eine Bewegung der Taste relativ zu dem Schaltmodul gewählt werden kann. Innerhalb des gewissen Spiels kann eine Bewegung der Taste relativ zu dem Schaltmodul erfolgen, ohne dass das Schaltmodul gegenüber dem Grundkörper des Schalters bewegt wird. Ein Anschlag der Taste an dem Schaltmodul oder an einem elektrischen Kontakt des Schaltmoduls kann genutzt werden, um die Bewegung der Taste relativ zu dem Schaltmodul und somit die gewählte Schaltoption zu erfassen. Eine Bewegung der Taste über das gewisse Spiel hinaus und somit über den Anschlag der Taste an dem Schaltmodul oder dem elektrischen Kontakt des Schaltmoduls hinaus, führt zu einer Bewegung des Schaltmoduls relativ zu dem Grundkörper des Schalters und damit zu der Erzeugung des Schaltsignals. Bei der Erzeugung des Schaltsignals kann ein Schließzustand des elektrischen Kontakts berücksichtigt werden. Beispielsweise kann das Schaltmodul ausgebildet sein, um das Schaltsignal abhängig von dem Schließzustand unterschiedlich zu kodieren. Auf diese Weise kann das Schaltsignal so ausgegeben werden, dass neben der Betätigung des Schalters an sich auch die ausgewählte Schaltoption mit dem Schaltsignal übermittelt wird. Es kann also während der Betätigung des Schalters ein Energieimpuls generiert und in dem Schaltmodul oder Elektronikmodul in Abhängigkeit von dem bereits betätigten Schließkontakt oder Kodierschalter zu einem Funksignal umgewandelt und per Funk versendet werden. Der Schließkontakt kann beabstandet zu einer Leiterplatte des Schaltmoduls angeordnet sein. Auf diese Weise kann der Schließkontakt in einem äußeren Randbereich des Schaltmoduls angeordnet sein oder über eine Außenwand des Schaltmoduls hervorstehen. Dadurch ist es im Gegensatz zu einem Kodierschalter, welcher sich auf der Leiterplatte im Inneren des Schaltmodules befindet, nicht erforderlich, dass der Schließkontakt mit einem Zusatzelement der Taste gleichzeitig zu einem Energiewandler des Schaltmoduls betätigt und gedrückt gehalten wird. Es kann somit auf eine Feinabstimmung und sehr präzise Toleranzen im System verzichtet werden. Außerdem ist es aufgrund der vorgesehenen Bewegungsfreiheit zwischen der Taste und dem Schaltmodul nicht erforderlich dass die Betätigungstaste im Falle eines Doppelschalters geteilt ausgeführt ist.

Das Schaltmodul kann für eine universelle Verwendung, beispielsweise in einem einfachen Schalter oder einem Mehrfachschalter vorgesehen sein. Beispiele für entsprechende Schalter sind ein Lichttaster bzw. eine Lichtschalter jeweils als Einfachschalter oder Mehrfachschalter oder ein Jalousieschalter mit geteilter oder ungeteilter Taste.

Indem das Schaltmodul an sich beweglich ausgeführt wird, hängt eine Haptik des Schalters nicht ausschließlich von einem Energiewandler des Schaltmoduls ab. Daher können die Betätigungswege und die Haptik des Schalters veränderbar ausgeführt werden.

Ein Schaltmodul für einen Schalter weist folgende Merkmale auf:
ein Gehäuse, das ausgebildet ist, um bei einer Betätigung des Schalters eine Schaltbewegung auszuführen;
einen Betätiger, der in dem Gehäuse angeordnet und ausgebildet ist, um bei der Schaltbewegung des Gehäuses eine durch eine Steuerkontur steuerbare Betätigungsbewegung auszuführen;
einen Energiewandler, der in dem Gehäuse angeordnet ist und ausgebildet ist, um angetrieben durch die Betätigungsbewegung des Betätigers einen elektrischen Impuls bereitzustellen; und
eine Schalteinheit zur Ausgabe eines auf dem elektrischen Impuls basierenden Schaltsignals zur Anzeige der Schaltbewegung des Gehäuses.

Bei dem Schalter kann es sich um einen Tastschalter handeln. Durch eine Betätigung einer Taste des Schalters, beispielsweise durch Ausüben von Druck auf die Taste, kann die Taste bewegt und dadurch der Schalter betätigt werden. Der Schalter kann zur Steuerung zumindest eines elektrischen Geräts, beispielsweise einer Lampe oder einer Jalousie, eingesetzt werden. Der Schalter kann beispielsweise im Bereich eines Gebäudes oder eines Fahrzeugs eingesetzt werden. Der Schalter kann zur Betätigung durch eine Person vorgesehen sein. Das Schaltmodul kann ausgebildet sein, um eine Betätigung des Schalters zu erkennen und ausgebildet sein, um ansprechend auf die Betätigung das Schaltsignal zur Anzeige der Betätigung zu erzeugen und auszugeben. Bei dem Schaltsignal kann es sich um ein elektrisches Signal handeln. Das Schaltmodul kann ausgebildet sein, um das Schaltsignal drahtlos oder leitungsgebunden auszugeben. Um die Betätigung des Schalters zu erkennen kann das Schaltmodul mit der Taste gekoppelt sein. Die Taste kann Teil des Schaltmoduls oder des Schalters sein. Das Gehäuse des Schaltmoduls kann einen Aufnahmerahmen für den Betätiger, den Energiewandler und die Schalteinheit darstellen. Das Gehäuse kann aus Kunststoff sein. Das Gehäuse kann eine Befestigungseinheit aufweisen, die so ausgeformt ist, dass das Gehäuse beweglich an einem Grundkörper des Schalters befestigt werden kann. Die Befestigungseinheit kann ausgebildet sein, um die Schaltbewegung als eine Relativbewegung zwischen dem Gehäuse und dem Grundkörper zu ermöglichen. Die Schaltbewegung kann vollständig oder teilweise einer Bewegung der Taste bei der Betätigung des Schalters entsprechen. Durch die Schaltbewegung kann das Gehäuse zusammen mit dem Betätiger, dem Energiewandler und der Schalteinheit bewegt werden. Die Schaltbewegung kann eine lineare Bewegung sein. Beispielsweise kann das Gehäuse während der Schaltbewegung geradlinig in Richtung des Grundkörpers bewegt werden. Auch kann das Gehäuse während der Schaltbewegung eine Drehbewegung oder eine Kippbewegung gegenüber dem Grundkörper ausführen. Beispielsweise kann das Gehäuse ausgebildet sein, um gegenüber dem Grundkörper eine Kippbewegung um eine Kippachse auszuführen, wenn das Schaltmodul mit dem Grundkörper des Schalters verbunden ist und der Schalter betätigt wird. Der Betätiger kann beweglich in dem Gehäuse angeordnet sein. Während das Gehäuse die Schaltbewegung ausführt, kann der Betätiger, gesteuert durch die Steuerkontur, die Betätigungsbewegung ausführen. Bei der Betätigungsbewegung kann es sich um eine Relativbewegung zwischen dem Betätiger und dem Gehäuse handeln. Die Betätigungsbewegung kann eine geradlinige Bewegung sein. Ein Endabschnitt des Betätigers kann während der Betätigungsbewegung in Kontakt mit der Steuerkontur sein. Die Steuerkontur kann starr mit dem Grundkörper der Schalters verbunden sein. Das bedeutet, dass die Steuerkontur während der Schaltbewegung des Gehäuses keine Relativbewegung in Bezug auf den Grundkörper ausführt. Durch eine Formgebung der Steuerkontur kann ein Zusammenhang zwischen der Schaltbewegung und der Betätigungsbewegung definiert werden. Beispielsweise kann die Steuerkontur als ein Steg oder eine Rampe mit einer geradlinigen oder einer gebogenen Wand zur Ausbildung der Steuerkontur ausgeführt sein. Durch die Form der Steuerkontur kann eine Haptik des Schalters vorgegeben werden. Der Energiewandler kann als ein elektromagnetischer Energiewandler in einer bereits bekannten Form ausgeführt sein und beispielsweise auf dem piezoelektrischen Effekt basieren. Der Energiewandler kann als ein Generator ausgeführt sein, der ausgebildet ist, um mechanische Energie, hier Bewegungsenergie in elektrische Energie umzuwandeln. Dazu kann der Energiewandler mit dem Betätiger gekoppelt sein, so dass der Energiewandler durch die Betätigungsbewegung des Betätigers betrieben werden kann. Der elektrische Impuls kann ein elektrischer Strom oder eine elektrische Spannung sein, und während des Betriebs des Energiewandlers aufgrund der Betätigungsbewegung des Betätigers von dem Energiewandler ausgegeben werden. Somit führt das Gehäuse aufgrund einer Betätigung des Schalters die Schaltbewegung aus, der Betätiger führt aufgrund der Schalterbewegung die Betätigungsbewegung aus und der Energiewandler stellt aufgrund der Betätigungsbewegung den elektrischen Impuls bereit. Somit ist der elektrische Impuls eine direkte Folge der Betätigung des Schalters. Die Schalteinheit ausgebildet, um den elektrischen Impuls in das Schaltsignal zu wandeln. Dazu kann die Schalteinheit ausgebildet sein, um den elektrischen Impuls als das Schaltsignal an eine Schnittstelle auszugeben. Ferner kann die Schalteinheit ausgebildet sein, um eine Kodierung des Schaltsignals durchzuführen.

Gemäß einer Ausführungsform kann das Schaltmodul eine Wanne mit der Steuerkontur aufweisen. Das Gehäuse kann gegenüber der Wanne bewegbar angeordnet sein, um die Schaltbewegung gegenüber der Wanne ausführen zu können. Im eingebauten Zustand kann die Wanne starr mit dem Grundkörper des Schalters verbunden sein. Beispielsweise kann das Gehäuse gegenüber der Wanne um eine Kippachse bewegbar angeordnet sein, um eine Kippbewegung gegenüber der Wanne ausführen zu können. Die Steuerkontur kann an der Wanne angeordnet sein oder durch einen Abschnitt der Wanne ausgebildet werden. Wird das Schaltmodul mit der Wanne realisiert, so kann das Schaltmodul als eigenständige Einheit getestet werden. Insbesondere kann getestet werden, ob das Schaltsignal ansprechend auf die Schaltbewegung des Gehäuses erzeugt wird.

Die Wanne kann mehrere Steuerkonturen aufweisen, die auf unterschiedlichen Seiten, beispielsweise gegenüberliegenden Seiten, der Wanne angeordnet sein können. Die Steuerkonturen können unterschiedliche ausgeformt sein, so dass durch die unterschiedlichen Steuerkonturen unterschiedliche Betätigungswege für die Taste des Schalters realisiert werden können. Entsprechend einem gewünschten Betätigungsweg kann das Gehäuse so in die Wanne eingesetzt werden, dass der Betätiger des Schaltmoduls mit derjenigen Steuerkontur zusammenwirken kann, durch die der gewünschte Betätigungsweg vorgegeben wird. Durch eine Formgebung einer Steuerkontur kann beispielsweise ein Schaltgeräusch während der Betätigung des Schalters erzeugt werden. Ferner kann durch die Steuerkontur ein Sprungeffekt oder ein Schnappeffekt währen der Betätigung des Schalters verstärkt oder gemildert werden.

Weist das Schaltmodul keine Wanne auf, so kann das Gehäuse gegenüber dem Grundköper des Schalters bewegbar angeordnet werden, um die Schaltbewegung gegenüber dem Grundkörper ausführen zu können. In diesem Fall kann die Steuerkontur an dem Grundkörper angeordnet sein oder durch einen Abschnitt des Grundkörpers ausgebildet werden. Entsprechend zu der Wanne können mehrere Steuerkonturen vorgesehen sein.

Die Schalteinheit kann eine Schnittstelle zur Ausgabe des Schaltsignals an eine Antenne aufweisen. Über die Antenne kann das Schaltsignal drahtlos an einen außerhalb des Schalters angeordneten Empfänger übertragen werden. Zur Übertragung kann das Schaltsignal mit einer geeigneten Einrichtung in ein zur Übertragung mit der Antenne geeignetes Funksignal, beispielsweise ein Hochfrequenz-Signal gewandelt werden. Die Einrichtung kann entsprechend bekannter Sendeeinrichtungen beispielsweise einen Oszillator, einen Modulator und einen nachfolgenden Verstärker aufweisen. Somit kann die Schnittstelle zur Ausgabe eines auf dem Schaltsignal basierenden Funksignals vorgesehen sein. Entsprechend kann die Antenne ausgebildet sein, um das auf dem Schaltsignal basierende Funksignal auszusenden. Gemäß einer Ausführungsform kann die Schalteinheit die Antenne aufweisen. Die Antenne kann somit Teil der Schalteinheit sein. Alternativ kann die Antenne Teil eines weiteren Elements des Schaltmoduls sein oder ein zusätzliches Element des Schaltmoduls darstellen. Auch kann die Antenne außerhalb des Schaltmoduls an oder in dem Schalter angeordnet sein und mit der Schalteinheit über die Schnittstelle verbunden sein. Beispielsweise kann die Antenne als Ringantenne ausgeführt sein. Die Antenne kann auf einer Leiterplatte aufgedruckt sein. Die Antenne ermöglicht es, das Schaltsignal an einen Empfänger zu übermitteln, ohne dass eine Verkabelung zwischen dem Schalter und dem Empfänger erforderlich ist.

Gemäß einer Ausführungsform kann die Schalteinheit zumindest einen elektrischen Schließkontakt zur Ausbildung eines Drucktasters an einer Position des Gehäuses aufweisen. Die Schalteinheit kann ausgebildet sein, um das Schaltsignal basierend auf dem elektrischen Impuls und einem Schließzustand des zumindest einen elektrischen Schließkontakts zu erzeugen. Beispielsweise kann die Schalteinheit einen ersten elektrischen Schließkontakt zur Ausbildung eines ersten Drucktasters an einer ersten Position des Gehäuses und mindestens einen zweiten elektrischen Schließkontakt zur Ausbildung eines zweiten Drucktasters an einer zweiten Position des Gehäuses aufweisen. Die Schalteinheit kann ausgebildet sein, um das Schaltsignal basierend auf dem elektrischen Impuls und einem Schließzustand des ersten elektrischen Schließkontakts und des zweiten elektrischen Schließkontakts zu erzeugen. Auf diese Weise kann das Schaltsignal eine unterschiedliche Form, eine unterschiedliche Kodierung oder einen unterschiedlichen Informationsgehalt aufweisen, abhängig davon, ob der erste Schließkontakt oder der zweite Schließkontakt geschlossen ist. Dazu können die Schließkontakte in eine geeignete Logikschaltung der Schalteinheit integriert sein. Die Schließkontakte können als Kodierschalter dienen. Zumindest ein Anteil des elektrischen Impulses des Energiewandlers oder ein daraus erzeugtes Signal kann den Schließkontakten zugeführt werden. Abhängig von einem Schließzustand eines Schließkontakts ist ein Stromfluss durch den Schließkontakt möglich oder nicht möglich. Der erste Schließkontakt kann ansprechend auf eine erste Bewegung der Taste des Schalters geschlossen werden. Beispielsweise kann der Schließkontakt zwei voneinander beabstandete Leitungsenden aufweisen, zwischen denen ein elektrischer Kurzschluss erzeugt wird, wenn die Taste gegen den Schließkontakt gedrückt wird. Dazu können die Leitungsenden in direkten Kontakt gebracht werden oder über ein Zwischenleitungsstück, das beispielsweise an der Taste angeordnet sein kann, elektrisch leitfähig verbunden werden. In einer Ruhestellung kann die Taste beabstandet zu der ersten Position und der zweiten Position des Gehäuses angeordnet sein. Die erste Bewegung kann so definiert sein, das sich die Taste ausgehend von der Ruhestellung der ersten Position annähert beziehungsweise die erste Position erreicht und auf diese Weise den ersten Schließkontakt betätigt. Auf diese Weise kann mittels des ersten Schließkontakts die erste Bewegung detektiert werden. Eine zweite Bewegung kann so definiert sein, das sich die Taste ausgehend von der Ruhestellung der zweiten Position annähert beziehungsweise die zweite Position erreicht und auf diese Weise den zweiten Schließkontakt betätigt. Auf diese Weise kann mittels des zweiten Schließkontakts die zweite Bewegung detektiert werden. Um die Schließkontakte betätigen zu können, kann die Taste beweglich an dem Gehäuse befestigt sein. Jedem Schließkontakt kann eine Schaltoption des Schalters zugeordnet sein, die durch eine entsprechende Bewegung der Taste ausgewählt werden kann. Auf diese Weise können durch eine Taste unterschiedliche Schaltoptionen realisiert werden. Eine erste Schaltoption kann beispielsweise zur Erhöhung einer Lichtstärke einer Lampe oder zum Öffnen einer Jalousie genutzt werden. Eine zweite Schaltoption kann beispielsweise zur Erniedrigung einer Lichtstärke der Lampe oder zum Schließen der Jalousie genutzt werden. Auf diese Weise sind keine getrennten Tasten zur Realisierung unterschiedlicher Schaltoptionen erforderlich. Weist der Schalter nur einen Schließkontakt auf, so kann dennoch zwischen zwei unterschiedlichen Schaltoptionen unterschieden werden, indem ausgewertet wird, ob der eine Schließkontakt während der Betätigung des Schalters geöffnet oder geschlossen ist.

Die Schalteinheit kann in entsprechender Weise weitere, beispielsweise drei, vier oder mehr Schließkontakte zur Detektion weiterer Bewegungen der Taste aufweisen. Dazu kann die Taste beispielsweise über mehrere Drehachsen fixiert sein, um abgestufte Bewegungen der Taste zu ermöglichen. Weist der Schalter mehrere Tasten auf, so kann jeder der Tasten ein einzelner Schließkontakt zugeordnet sein oder es können jeder Taste mehrere, beispielsweise zwei, Schließkontakte zugeordnet sein.

Die Schalteinheit kann ein Stanzgitter mit einer ersten Leiterbahn für den ersten elektrischen Schließkontakt und einer zweiten Leiterbahn für den zweiten elektrischen Schließkontakt aufweisen. Dabei können die erste Leiterbahn und die zweite Leiterbahn über eine auftrennbare Kurzschlussverbindung miteinander verbunden sein. Die Leiterbahnen des Stanzgitters können parallel zueinander verlaufen. Die Kurzschlussverbindung kann eine elektrisch leitfähige Verbindung zwischen der ersten Leiterbahn und der zweiten Leiterbahnen darstellen. Die Kurzschlussverbindung kann zudem eine mechanische Verbindung zwischen der ersten Leiterbahn und der zweiten Leiterbahnen darstellen. Auftrennbar kann in Bezug auf die Kurzschlussverbindung bedeutet, dass die Kurzschlussverbindung nach der Montage des Stanzgitters an der Schalteinheit mit einfachen Mitteln aufgetrennt werden kann. Auf diese Weise können die erste Leiterbahn und die zweite Leiterbahn einstückig hergestellt und an der Schalteinheit befestigt werden. Anschließend kann die Kurzschlussverbindung getrennt werden, um den ersten und den zweiten Schließkontakt getrennt voneinander betreiben zu können. Durch die Kurzschlussverbindung können sowohl die Herstellungskosten der Leiterbahnen als auch die Montagekosten des Schaltmoduls gering gehalten werden.

Das Schaltmodul kann einen Deckel zum Abdecken des Gehäuses aufweisen. Der Deckel kann im montierten Zustand des Schaltmoduls zwischen dem Gehäuse und der Taste des Schalters angeordnet sein. Alternativ kann die Taste durch den Deckel gebildet werden. Durch den Deckel können beispielsweise die Schalteinheit oder Teile der Schalteinheit, wie das Stanzgitter in dem Gehäuse fixiert werden.

Der Deckel kann eine Einrichtung zur Ermöglichung einer Trennung einer Kurzschlussverbindung zwischen dem ersten elektrischen Schließkontakt und dem zweiten elektrischen Schließkontakt aufweisen. Insbesondere kann der Deckel als Einrichtung zur Ermöglichung der Trennung zumindest eine Durchgangsöffnung aufweisen. Die Durchgangsöffnung kann innerhalb des Deckels auf Höhe der Kurzschlussverbindung angeordnet sein, wenn der Deckel und das Gehäuse miteinander verbunden sind. Durch die Durchgangsöffnung kann ein Werkzeug geführt werden, mit dem die Kurzschlussverbindung getrennt werden kann. Nach dem Trennen der Kurzschlussverbindung kann das Werkzeug durch die Durchgangsöffnung wieder entfernt werden. Auch kann die Einrichtung zur Ermöglichung der Trennung selbst als ein Trennwerkzeug ausgebildet sein. Durch die Einrichtung zur Ermöglichung der Trennung kann das Schaltmodul fertig montiert werden. Anschließend kann das Stanzgitter unterteilt werden. Wird bei einem Schalter die Funktionalitäten der Schließkontakte nicht benötigt, so kann das Trennen der Kurzschlussverbindung unterbleiben. Auf diese Weise können kostengünstig zwei unterschiedliche Ausführungsvarianten des Schalters realisiert werden.

Der Deckel kann an der ersten Position eine Durchgangsöffnung für den ersten elektrischen Schließkontakt und an der zweiten Position eine Durchgangsöffnung für den zweiten elektrischen Schließkontakt aufweisen. Auf diese Weise können Elemente der Schließkontakte durch den Deckel hindurchgeführt werden, damit die Schließkontakte von der Taste betätigt werden können. Alternativ oder zusätzlich können Elemente des Deckels, beispielswiese in Form von Betätigungsnoppen, zur Betätigung der Schließkontakte durch die Durchgangsöffnung des Deckels bewegt werden.

Das Schaltmodul kann ein Halteelement zum Halten zumindest einer Taste des Schalters aufweisen. Dabei kann das Halteelement ausgebildet sein, um eine Relativbewegung der zumindest einen Taste relativ zu dem Gehäuse zu ermöglichen, wenn die zumindest eine Taste von dem Halteelement gehalten wird. Beispielsweise kann durch das Halteelement eine erste Bewegung zwischen einer Ruhestellung der Taste und einer ersten Stellung der Taste zur Betätigung des ersten Schließkontakts und eine zweite Bewegung zwischen der Ruheposition der Taste und einer zweiten Stellung der Taste zur Betätigung des zweiten Schließkontakts ermöglicht werden. Dies ermöglicht es, dass die Taste bei einer Betätigung derselben zunächst zu dem Gehäuse hin gedrückt wird, wodurch beispielsweise einer der Schließkontakte betätigt werden kann. Erst nachdem die Taste einen Anschlag gegenüber dem Gehäuse erreicht hat, kann durch eine weitere Betätigung der Taste das Gehäuse zusammen mit der Taste die Schaltbewegung ausführen. Dabei kann der entsprechende Schließkontakt betätigt bleiben. Auf diese Weise kann der Schließzustand ausgewertet werden, wenn der elektrische Impuls durch den Energiewandler erzeugt wird. Ist der Schalter als Kippschalter ausgeführt, das heißt, dass das Gehäuse als Schaltbewegung eine Kippbewegung um eine Kippachse ausführt, so kann die Relativbewegung der zumindest einen Taste um eine quer zur Kippachse angeordnete Drehachse oder alternativ um eine längs zur Kippachse angeordneten Drehachse ausgeführt werden. Das Halteelement kann ein separates Bauteil sein, das auf das Gehäuse oder den Deckel des Schaltmoduls aufgesetzt werden kann. Auch kann das Halteelement durch einen Abschnitt des Gehäuses oder des Deckels, beispielsweise einen Fortsatz zur Bildung einer Drehachse, realisiert sein.

Der Energiewandler kann ausgebildet sein, um ansprechend auf eine der Betätigungsbewegung entgegengesetzten Bewegung des Betätigers einen weiteren elektrischen Impuls bereitzustellen. Die Schalteinheit kann ausgebildet sein, um ein auf dem weiteren elektrischen Impuls basierendes weiteres Schaltsignal zur Anzeige einer Rückstellbewegung des Gehäuses zu erzeugen. Die der Betätigungsbewegung entgegengesetzte Bewegung des Betätigers kann mit einer der Schaltbewegung entgegengesetzten Bewegung des Gehäuses einhergehen. Die entgegengesetzte Bewegung des Betätigers kann durch eine erneute, anders gerichtete Betätigung des Schalters oder durch ein Rückstellelement des Schalters oder des Schaltmoduls ausgelöst werden. Bei dem Rückstellelement kann es sich um eine Rückstellfeder handeln, die bei einer Betätigung des Schalters gespannt wird und bei einer Beendigung der Betätigung des Schalters eine Rückstellkraft auf den Betätiger oder das Gehäuse ausübt und dadurch die Taste des Schalters in die Ruheposition zurückführt. Das Schaltsignal und das weitere Schaltsignal können eine unterschiedliche Form, beispielsweise eine unterschiedliche Kodierung aufweisen. Somit kann beispielsweise das Schaltsignal bei einem Empfänger das Starten einer Funktion auslösen und das weitere Schaltsignal kann bei dem Empfänger das Beenden einer Funktion auslösen.

Ein Verfahren zum Anzeigen einer Betätigung eines Schalters, wobei der Schalter eine betätigbare Taste aufweist, die beweglich an einem bewegbar angeordneten Gehäuse des Schalters befestigt ist, umfasst die folgenden Schritte:
Erkennen einer Relativbewegung zwischen der Taste und dem Gehäuse;
Bereitstellen eines elektrischen Impulses ansprechend auf eine Synchronbewegung zwischen der Taste und dem Gehäuse; und
Erzeugen eines Schaltsignals basierend auf dem elektrischen Impuls und der im Schritt des Erkennens erkannten Relativbewegung, um die Betätigung des Schalters anzuzeigen.

Die Schritte des Verfahrens können von einer geeigneten Vorrichtung, beispielsweise von einem Schaltmodul des Schalters, umgesetzt werden. Das Erkennen der Relativbewegung kann beispielsweise durch ein Auswerten eines Schließzustandes eines oder mehrerer durch die Taste betätigbarer Schließkontakte erfolgen. Dazu kann beispielsweise eine an einem Schließkontakt anliegende Spannung oder ein durch einen Schließkontakt fließender Strom erfasst und ausgewertet werden oder zur Erzeugung des Schaltsignals genutzt werden. Das Bereitstellen des elektrischen Impulses kann beispielsweise durch ein Umwandeln der aufgrund der Synchronbewegung vorhandenen Bewegungsenergie des Gehäuses in elektrische Energie erfolgen. Das Erzeugen des Schaltsignals kann mittels einer geeigneten elektrischen Schaltung durchgeführt werden. Das Verfahren macht sich durch eine Betätigung des Schalters ausgelöste Bewegungen von Elementen des Schalters zu Nutze, um ohne Zuführung elektrischer Energie ein elektrisches Schaltsignal zu erzeugen, mit dem die Betätigung des Schalters angezeigt werden kann. In einem weiteren Schritt kann das Schaltsignal beispielsweise drahtlos an einen Empfänger übertragen werden, der das Schaltsignal als Steuersignal für eine elektrische Vorrichtung einsetzen kann.

Ein Schalter weist folgende Merkmale auf:
eine Grundplatte zur Befestigung des Schalters;
zumindest eine Taste zur Betätigung des Schalters; und
ein Schaltmodul, wobei das Schaltmodul zwischen der Grundplatte und der zumindest einen Taste angeordnet ist.

Die Grundplatte kann auch als Grundkörper oder Teil des Grundkörpers des Schalters bezeichnet werden. Mittels der Grundplatte kann der Schalter beispielsweise an einer Wand oder allgemein gesprochen, an einem Gegenstand oder einem Objekt befestigt werden. Die Befestigung kann beispielsweise mittels einer Klebverbindung oder einer Schaubverbindung erfolgen. Das Schaltmodul kann entsprechend einer Ausführungsform der Erfindung ausgeführt sein. Eine Verbindung zwischen dem Schaltmodul und der Grundplatte kann so ausgeführt sein, das sich das Gehäuse des Schaltmoduls gegenüber der Grundplatte bewegen kann, um bei einer Betätigung des Schalters die Schaltbewegung ausführen zu können. Das Gehäuse kann direkt mit der Grundplatte, mittels eines Verbindungselements des Schalters oder mit einem Element des Schaltmoduls, beispielsweise einer Wanne, mit der Grundplatte verbunden sein. Die Taste des Schalters kann je nach Ausführung des Schaltmoduls mit dem Gehäuse oder einem Deckel des Schaltmoduls starr oder beweglich verbunden sein.

Ein Verfahren zum Steuern einer Vorrichtung mittels eines Schaltsignals eines Schalters, wobei die Vorrichtung eine Mehrzahl von Zuständen einnehmen kann und einen fließenden Übergang zwischen zwei Endzuständen der Mehrzahl von Zuständen ermöglicht, umfasst die folgenden Schritte:
Empfangen des Schaltsignals über eine Schnittstelle, wobei das Schaltsignal ein Schaltsignal eines Schalters repräsentiert;
Bestimmen, ob das Schaltsignal die Schaltbewegung oder eine der Schaltbewegung entgegengesetzte Rückstellbewegung des Gehäuses des Schaltmoduls anzeigt;
Erzeugen eines Startsignals zum Starten eines fließenden Übergangs von einem aktuellen Zustand der Mehrzahl von Zuständen der Vorrichtung zu einem der zumindest zwei Endzustände, wenn das Schaltsignal die Schaltbewegung anzeigt; und
Erzeugen eines Stoppsignals zum Beenden des fließenden Übergangs zu dem einen der zumindest zwei Endzustände, wenn das Schaltsignal die Rückstellbewegung anzeigt.

Der Schalter kann entsprechend einer Ausführungsform der Erfindung ausgeführt sein. Durch das Schaltsignal kann übermittelt werden, ob die Taste des Schalters aus der Ruheposition heraus betätigt wird oder manuell oder automatisch wieder in die Ruheposition zurückgeführt wird. Ermöglicht der Schalter Bewegungen der Taste entlang unterschiedlicher Bewegungstrajektorien, so kann durch das Schaltsignal ferner übermittelt werden, entlang welcher Bewegungstrajektorie eine Betätigung der Taste erfolgt ist. Die Vorrichtung die mittels des Verfahrens gesteuert werden kann, kann beispielsweise zumindest ein Lampe oder zumindest eine Jalousie umfassen. Bei einer Lampe kann der fließende Übergang einer Dimmfunktionalität entsprechen. Die Endzustände können einer maximalen Leuchtstärke und einem ausgeschalteten Zustand der Lampe entsprechen. Der aktuelle Zustand kann einem der Endzustände oder einem Betrieb der Lampe mit einer geringeren als der maximalen Leuchtstärke entsprechen. Durch den fließenden Übergang kann die Leuchtstärke kontinuierlich erhöht oder erniedrigt werden. Bei einer Jalousie kann der fließende Übergang einer Öffnungsbewegung oder einer Schließbewegung entsprechen. Die Endzustände können einen vollständig geöffneten oder einen vollständig geschlossenen Zustand der Jalousie entsprechen. Der aktuelle Zustand kann einem der Endzustände oder einem teilweise geöffneten Zustand der Lampe entsprechen. Durch den fließenden Übergang kann die Jalousie kontinuierlich geöffnet oder geschlossen werden.

Wird das Schaltsignal drahtlos übermittelt, so kann das Empfangen des Schaltsignals über eine Antenne erfolgen. Im Schritt des Bestimmens kann das Schaltsignal ausgewertet werden, um eine mittels des Schaltsignals übertragene Information über eine Betätigung des Schalters zu bestimmen. Dabei kann das Schaltsignal dekodiert werden. Abhängig von der von dem Schaltsignal übertragenen Information wird im Schritt des Erzeugens entweder das Startsignal oder das Stoppsignal erzeugt. Dazu kann eine geeignete Logikschaltung vorgesehen sein.

Eine Steuervorrichtung zum Steuern einer Vorrichtung mittels eines Schaltsignals eines Schaltmoduls, wobei die Vorrichtung eine Mehrzahl von Zuständen einnehmen kann und einen fließenden Übergang zwischen zwei Endzuständen der Mehrzahl von Zuständen ermöglicht, wiest folgenden Merkmale auf:
eine Empfangseinrichtung zum Empfangen des Schaltsignals über eine Schnittstelle, wobei das Schaltsignal ein Schaltsignal eines Schaltmoduls repräsentiert;
eine Bestimmungseinrichtung zum Bestimmen, ob das Schaltsignal die Schaltbewegung oder eine der Schaltbewegung entgegengesetzte Rückstellbewegung des Gehäuses des Schaltmoduls anzeigt; und
eine Logikeinrichtung zum Erzeugen eines Startsignals zum Starten eines fließenden Übergangs von einem aktuellen Zustand der Mehrzahl von Zuständen der Vorrichtung zu einem der zumindest zwei Endzustände, wenn das Schaltsignal die Kippbewegung anzeigt, und zum Erzeugen eines Stoppsignals zum Beenden des fließenden Übergangs zu dem einen der zumindest zwei Endzustände, wenn das Schaltsignal die Rückstellbewegung anzeigt.

Mittels der Steuervorrichtung können die Schritte des Verfahrens zum Steuern einer Vorrichtung ausgeführt werden.

Die Erfindung wird anhand der beigefügten Zeichnungen beispielhaft näher erläutert. Es zeigen:
- Fig. 1: eine Darstellung eines Schalters gemäß einem Ausführungsbeispiel der vorliegenden Erfindung;
- Fig. 2: eine Darstellung eines Schaltmoduls gemäß einem Ausführungsbeispiel der vorliegenden Erfindung;
- Fig. 3: eine Darstellung eines Schaltmoduls gemäß einem Ausführungsbeispiel der vorliegenden Erfindung;
- Fig. 4: eine Darstellung eines Schaltmoduls gemäß einem Ausführungsbeispiel der vorliegenden Erfindung;
- Fig. 5: eine Darstellung eines Schalters gemäß einem Ausführungsbeispiel der vorliegenden Erfindung;
- Fig. 6: eine Darstellung eines Schaltmoduls gemäß einem Ausführungsbeispiel der vorliegenden Erfindung;
- Fig. 7: eine Darstellung eines Schaltmoduls gemäß einem Ausführungsbeispiel der vorliegenden Erfindung;
- Fig. 8: eine Darstellung eines Systems mit einem Schalter gemäß einem Ausführungsbeispiel der vorliegenden Erfindung;
- Fig. 9: ein Ablaufdiagramm eines Verfahrens zum Steuern einer Vorrichtung gemäß einem Ausführungsbeispiel der vorliegenden Erfindung; und
- Fig. 10: ein Ablaufdiagramm eines Verfahren zum Anzeigen einer Betätigung eines Schalters gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

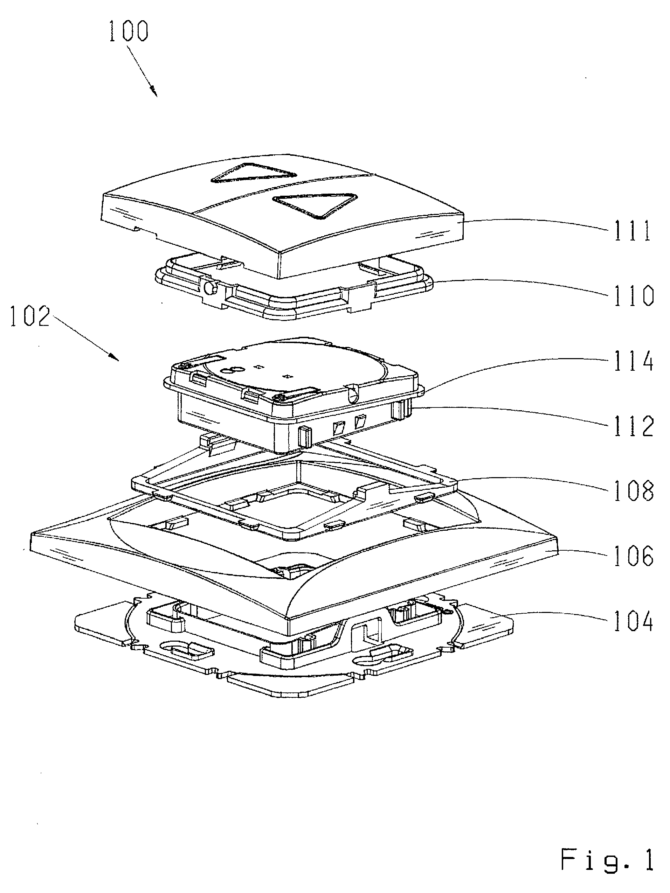

Fig. 1 zeigt eine Darstellung eines Schalters 100 in einer Explosionsdarstellung gemäß einem Ausführungsbeispiel der vorliegenden Erfindung. Der Schalter 100 ist als ein autarker Funktaster realisiert und weist ein autarkes Schaltmodul 102 auf.

Neben dem Schaltmodul 102 weist der Schalter 100 eine Grundplatte 104, einen Rahmen 106, einen Fixierring 108, einen Adapterrahmen 110 und eine Taste 111 auf. Zum Herstellen des Schalters 100 wird der Rahmen 106 auf die Grundplatte 104 aufgesetzt. Der Rahmen 106 weist ein rechteckiges Fenster auf, in das der Fixierring 108 eingesetzt wird. Die Grundplatte 104, der Rahmen 106 und der Fixierring 108 weisen geeignete Verbindungselemente zum Herstellen einer festen Verbindung zwischen der Grundplatte 104, dem Rahmen 106 und der Fixierring 108 auf. Beispielsweise kann zwischen der Grundplatte 104 und dem Fixierring 108 eine Klemmverbindung hergestellt werden, durch die der Rahmen 106 zwischen der Grundplatte 104 und dem Fixierring 108 fixiert wird. Der Fixierring 108 ist als ein weiterer Rahmen realisiert, in den das Schaltmodul 102 eingesetzt werden kann.

Das Schaltmodul 102 weist eine Wanne 112 und einem Deckel 114 auf. Der Deckel 114 ist beweglich mit der Wanne 112 verbunden. Gemäß diesem Ausführungsbeispiel kann der Deckel 114 gegenüber der Wanne 112 eine Kippbewegung um eine Kippachse ausführen. Der Fixierring 108 ist ausgebildet, um die Wanne 112 des Schaltmoduls 102 aufzunehmen und zu fixieren. Dazu beweisen die Wanne 112 und der Fixierring 108 geeignete Elemente zur Ausbildung, beispielsweise einer Schnappverbindung zwischen dem Fixierring 108 und der Wanne 112 auf. Im montierten Zustand sind die Grundplatte 104, der Rahmen 106, der Fixierring 108 und die Wanne 112 unbeweglich oder starr miteinander verbunden. Der Deckel 114 des Schaltmoduls 102 kann aufgrund der beweglichen Verbindung mit der Wanne 112 die Kippbewegung relativ zu dem Verbund aus der Grundplatte 104, dem Rahmen 106, dem Fixierring 108 und der Wanne 112 ausführen. Innerhalb des Schaltmoduls 102 ist ein Gehäuse angeordnet, dass mit dem Deckel 114 verbunden ist und somit zusammen mit dem Deckel 114 die Kippbewegung ausführen kann.

Nach dem Einsetzen des Schaltmoduls 102 in die Grundplatte 104 kann der Adapterrahmen 110 auf den Deckel 114 des Schaltmoduls 102 aufgesetzt werden und an dem Deckel 114 fixiert werden. Durch geeignete Elemente an dem Deckel 114 und dem Adapterrahmen 110 können der Deckel 114 und der Adapterrahmen 110 unbeweglich oder starr miteinander verbunden werden.

Gemäß diesem Ausführungsbeispiel bildet der Adapterrahmen 110 ein Halteelement für die Taste 111. Die Taste 111 kann auf den Adapterrahmen 110 aufgesetzt werden. Die Taste 111 und der Adapterrahmen 110 weisen geeignete Elemente auf, um eine bewegliche Verbindung zwischen dem Adapterrahmen 110 und der Taste 111 zu ermöglichen. Gemäß diesem Ausführungsbeispiel ist die Verbindung zwischen der Taste 111 und dem Adapterrahmen 110 so ausgeführt, dass die Taste 111 eine Kippbewegung um eine Drehachse gegenüber dem Adapterrahmen 110 ausführen kann. Dazu weist der Adapterrahmen 110 auf einander gegenüberliegenden Seiten angeordnete und nach außen zeigende zylinderförmige Fortsätze zur Ausbildung von Endabschnitten der Drehachse auf. Die Drehachse ist dabei quer zur Kippachse des Schaltelements ausgeführt. Gemäß diesem Ausführungsbeispiel verlaufen sowohl die Drehachse als auch die Kippachse jeweils in etwa mittig zur den Schalter 100.

Die Taste 111 ist einteilig ausgeführt. Auf einer äußeren Oberfläche weist die Taste 111 grafische Elemente auf. Insbesondere weiß die Taste 111 eine Mittellinie zur Unterteilung der Taste 111 in zwei Tastbereiche auf. In jedem der zwei Tastbereiche ist ein Piktogramm eines Pfeils angeordnet, wobei die Pfeile in unterschiedliche Richtungen zeigen.

Bei einer Betätigung des Schalters 100 durch eine Person, kann die Person zwischen den beiden Tastbereichen der Taste 111 und somit zwischen zwei Schaltoptionen wählen. Die Drehachse, um die die Taste 111 die Drehbewegung gegenüber dem Adapterrahmen 110 ausführen kann, ist parallel zu und auf Höhe der Mittellinie der Taste 111 angeordnet. Je nachdem auf welchen der beiden Tastbereiche bei der Betätigung der Taste 111 Druck ausgeübt wird, führt die Taste 111 die Kippbewegung so aus, dass diejenige Seite der Taste 111 auf der sich der gedrückte Tastbereich befindet, in Richtung des Adapterrahmens 110 bewegt und gegen den Adapterrahmen 110 oder alternativ einen anderen Anschlag gedrückt wird. Die gegenüberliegende Seite der Taste 111 bewegt sich dagegen aufgrund der Drehbewegung um die Drehachse von dem Adapterrahmen 110 weg. Sobald die Kippbewegung der Taste 111 aufgrund eines Anschlags der Taste 111 an dem Adapterrahmen 110 gestoppt wird, kann der durch die Betätigung des Schalters 100 auf die Taste 111 ausgeübte Druck über den Adapterrahmen 110 auf den Deckel 114 des Schaltmoduls 102 übertragen werden und zu der Kippbewegung des Deckels 114 um die Kippachse führen. Während der Bewegung des Deckels 114 liegt diejenige Seite der Taste 111, an der sich der gedrückte Tastbereich befindet, weiterhin an dem Adapterrahmen 110 an. Zwischen dem Adapterrahmen 110 und der Taste 111 können zwei Schließkontakte angeordnet sein. Dabei kann jedem der beiden Tastbereiche jeweils einer der Schließkontakte zugeordnet sein. Auf diese Weise kann detektiert werden, welcher der beiden Tastbereiche des Schalters 100 betätigt wird.

Im Folgenden wird auf die einzelnen Elemente des Schalters 100 eingegangen. Der Schalter 100 besteht im Wesentlichen aus der Grundplatte 104, dem autarken Schaltmodul 102, dem Rahmen 106, dem Fixierring 108, dem Adapterrahmen 110 und der Taste 111.

Die Grundplatte 104, auch Bodenplatte genannt, ist ausgebildet, um beliebig, z. B. mit Schraubverfahren oder Klebeverfahren direkt auf Putz, Möbelteile, Fliesen, Glass oder auf ein Türblatt, usw. befestigt zu werden. Außerdem beinhaltet die Bodenplatte eine Schnittstelle zur Aufnahme des autarken Schaltmodules 102.

Das autarke Schaltmodul 102, kann verschiedene Funktionen aufweisen und mit unterschiedlicher Haptik realisiert sein. Anhand der weiteren Figuren wird die Funktion und der Aufbau des Schaltmodules 102 detailliert beschrieben.

Der Rahmen 106, auch Schalterrahmen genannt, ist ausgebildet, um direkt auf die Grundplatte 104 mit Hilfe des Fixierringes 108 eingerastet zu werden. Der Fixierring 108 ist zur Fixierung des Rahmens 106 angedacht.

Der Adapterrahmen 110, ist zur Fixierung der Taste 111, auch Schalttaste genannt, bestimmt. Der Adapterrahmen 110 erleichtert die Verwendung des Schalters 100 in verschiedenen Schaltsystemen. Gemäß einem Ausführungsbeispiel sind Fixierelemente zur Fixierung der Taste 111 direkt in den Deckel 114 des Schaltmodules 102 integriert.

Die Taste 111 kann beliebig ausgebildet sein. Beispielsweise kann die Taste 111 als Einzeltaste für eine Funktion und als ungeteilte Taste für eine Doppelfunktion ausgeführt sein. Ferner kann die Taste 111 als eine zweifach oder mehrfach geteilte Taste für mehrere Funktionen realisiert sein.

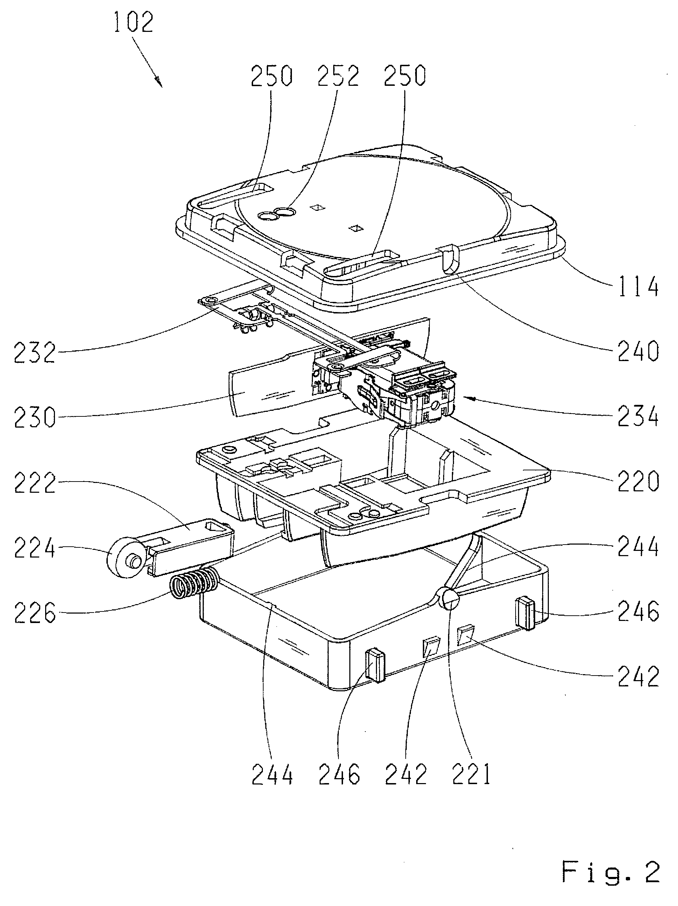

Fig. 2 eine Darstellung eines Schaltmoduls 102 in einer Explosionsdarstellung gemäß einem Ausführungsbeispiel der vorliegenden Erfindung. Das Schaltmodul 102 kann, wie in Fig. 1 gezeigt, für einen Schalter verwendet werden.

Das Schaltmodul 102 weist die Wanne 112, den Deckel 114 und ein Gehäuse 220 auf. Die Wanne 112 weist eine umlaufende Wand auf, in die das Gehäuse 220 eingesetzt werden kann. Der Deckel 114 kann auf das Gehäuse 220 aufgesetzt werden, so dass das Gehäuse 220 auf einer der Wanne 112 abgewandten Seite von dem Deckel 114 abgedeckt wird. Der Deckel 114 und das Gehäuse 220 können fest oder starr miteinander verbunden sein. Der Verbund aus dem Deckel 114 und dem Gehäuse 220 kann beweglich gegenüber der Wanne 112 angeordnet sein. Gemäß diesem Ausführungsbeispiel ist eine Verbindung zwischen dem Verbund aus dem Deckel 114 und dem Gehäuse 220 sowie der Wanne 112 so ausgeführt, dass der Verbund aus dem Deckel 114 und dem Gehäuse 220 die Kippbewegung um die bereits anhand von Fig. 1 erwähnte Kippachse 221 ausführen kann.

Das Schaltmodul 102 weist ferner einen Betätiger 222 auf, der gemäß diesem Ausführungsbeispiel eine Rolle 224 und eine Feder 226 umfasst, sowie ein Elektronikmodul auf. Das Elektronikmodul weist eine Leiterplatte 230 mit einem autarken Funkmodul, ein Schaltsystem 232 und einen Energiewandler 234 auf. Die Leiterplatte 230, das Schaltsystem 232 und der Energiewandler 234 sind sowohl mechanisch als auch elektrisch leitend miteinander verbunden. Eine Hauptoberfläche der Leiterplatte 230 steht im montierten Zustand quer zu einer Hauptoberfläche des Gehäuses 220. Gemäß diesem Ausführungsbeispiel verläuft eine Haupterstreckungsrichtung der Leiterplatte 230 quer zu der Kippachse 221. Eine Haupterstreckungsrichtung des Schaltsystems 232 verläuft quer zu einer Haupterstreckungsrichtung der Leiterplatte 230. Das Schaltsystem 232 ist auf eine Kante der Leiterplatte 230 aufgesetzt.

Das Gehäuse 220 ist ausgebildet, um den Betätiger 222 aufzunehmen. Das Gehäuse 220 weist einen seitlichen Einschub auf, in dem der Betätiger 222 angeordnet werden kann. Gemäß diesem Ausführungsbeispiel in der Einschub so ausgerichtet, dass der Betätiger 222 innerhalb des Einschubs eine lineare Bewegung innerhalb einer Haupterstreckungsebene und quer zur Kippachse 221 des Schaltmoduls 102 ausführen kann.

Die Wanne 112 weist an gegenüberliegenden Wandbereichen der umlaufenden Wand zwei zylinderförmige Fortsätze zur Bildung von Endabschnitten der Kippachse 221 auf. In die Fortsätze können entsprechende Aussparungen 240 des Deckels 114 eingreifen, so dass der Deckel 114 über die Fortsätze mit der Wanne 112 so verbunden wird, dass der Deckel 114 die Kippbewegung um die Kippachse 221 ausführen kann, ohne dass sich der Deckel 114 von der Wanne 112 löst.

Die Wanne 112 weist ferner zumindest eine Rastnase 242 auf, durch die die Wanne 112 über eine oder mehrere Rastverbindungen mit einem Grundkörper des Schalters starr verbunden werden kann.

Ferner weist die Wanne 112 an zumindest einem inneren Wandabschnitt der umlaufenden Wand eine Steuerkontur 244 auf. Gemäß diesem Ausführungsbeispiel weist die Wanne 112 an gegenüberliegenden Wandabschnitten jeweils eine Steuerkontur 244 auf. Die Steuerkonturen 244 sind jeweils als rampenförmiger Steg ausgebildet. Die Steuerkonturen 244 erstecken sich ausgehend von der umlaufenden Wand in einen von der umlaufenden Wand umschlossenen Innenraum der Wanne 112 hinein.

Die Wanne 112 weist an der umlaufenden Wand ferner zwei Anschläge 246 als Stütze für die Wanne 112 auf.

Bei einer Montage des Schaltmoduls 102 wird das Gehäuse 220 mit dem integrierten Betätiger 222 so in die Wanne 112 eingesetzt, das ein aus dem Gehäuse 220 herauszeigender Endabschnitt des Betätigers 222 gegenüber einer der Steuerkonturen 244 ausgerichtet ist. Führt das Gehäuse 220 die Kippbewegung aus, so gleitet der Endabschnitt des Betätigers 222 an der Steuerkontur 244 der Wanne 112 entlang. Je nach Form der Steuerkontur 244 wird der Betätiger 222 während der Kippbewegung entweder von der Steuerkontur 244 weiter in das Gehäuse 220 hinein gedrückt oder durch die Feder 226 weiter aus dem Gehäuse 220 heraus gedrückt.

Das Gehäuse 220 ist ferner ausgebildet, um das Elektronikmodul aufzunehmen. Dazu weist das Gehäuse 220 auf einer dem Deckel 114 zugewandten Seite mehrere Aussparungen auf, von denen Elemente des Elektronikmoduls aufgenommen werden können. Durch den Deckel 114 kann das Elektronikmodul in dem Gehäuse 220 fixiert werden, so dass das Elektronikmodul die Kippbewegung zusammen mit dem Gehäuse 220 ausführen kann. Der Energiewandler 234 des Elektronikmoduls ist im montierten Zustand so in dem Gehäuse angeordnet, dass der Energiewandler 234 durch den Betätiger 222 betrieben werden kann. Das Schaltsystem 232 weist mehrere Leiter oder Leiterbahnen eines Stanzgitters auf. Zumindest einige der Leiter des Schaltsystems 232 können über Schließkontakte miteinander gekoppelt sein. Gemäß diesem Ausführungsbeispiel weist das Schaltsystem 232 zwei Schließkontakte auf.

Die Schließkontakte können dadurch betätigt werden, dass sich die Taste des Schalters an den entsprechenden Schließkontakt annähert und den Schließkontakt, je nach Ausführung des Schließkontakts entweder öffnet oder schließt. Der Deckel 114 weist zwei, beispielsweise längliche, Durchgangslöcher 250 auf. Jedem der Durchgangslöcher 250 ist einer der Schließkontakte zugeordnet. Die Schließkontakte sind so ausgeformt und angeordnet, dass sie im montierten Zustand des Schaltmoduls 102 durch die Durchganglöcher 250 hindurch durch die Taste des Schalters betätigt werden können. Beispielsweise kann die Taste zwei Betätigungsnoppen aufweisen, die im montierten Zustand der Taste gegenüber den Durchgangslöchern 250 ausgerichtet sind. Bei einer entsprechenden Betätigung der Taste kann sich eine der Betätigungsnoppen durch eines der Durchgangslöcher 250 hindurcherstrecken und dadurch den entsprechenden der Schließkontakte betätigen. Alternativ können die Schließkontakte so ausgeführt sein, dass sie sich im montierten Zustand des Deckels durch die Durchgangslöcher 250 hindurcherstrecken, so dass sie direkt durch die Taste betätigt werden können. Die Durchgangslöcher 250 und somit auch die Schließkontakte sind beabstandet voneinander auf unterschiedlichen Seiten in Bezug auf die Drehachse der Taste des Schalters und auf gleicher Seite der Kippachse 221 angeordnet. Auf diese Weise kann je nachdem auf welchen Tastbereich der Taste des Schalters Druck ausgeübt wird, entweder der eine Schließkontakt oder der andere Schließkontakt betätigt werden. Durch eine geeignete Auswerteschaltung des Elektronikmoduls, die beispielsweise auf der Leiterplatte 230 angeordnet sein kann, kann ein Betätigungszustand der beiden Schließkontakte erfasst und zur Erzeugung eines Schaltsignals genutzt werden.

Der Energiewandler 234 ist ausgebildet, um zur Erzeugung des Schaltsignals erforderliche elektrische Energie ansprechend auf eine Betätigungsbewegung des Betätigers 222 zu erzeugen. Dazu ist der Energiewandler mit dem Betätiger 222 gekoppelt. Die von dem Energiewandler 234 bereitgestellte Energie kann beispielsweise von der Auswerteschaltung des Elektronikmoduls verwendet werden, um das Schaltsignal unter Berücksichtigung des Betätigungszustands der beiden Schließkontakte zu erzeugen und über eine Schnittstelle auszugeben.

Gemäß diesem Ausführungsbeispiel wird das Schaltsignal über die Schnittstelle an eine Antenne zur drahtlosen Übertragung des Schaltsignals ausgegeben. Die Antenne kann beispielsweise in der Leiterplatte 230 angeordnet und durch Leiterbahnen der Leiterplatte 230 gebildet sein.

Gemäß diesem Ausführungsbespiel wird ein zusammenhängendes Stanzgitter als Grundstruktur für das Schaltsystem 232 eingesetzt. Die Leiterbahnen des Stanzgitters sind aufgrund der einstückigen Ausführung des Stanzgitters über zumindest eine Kurzschlussverbindung mechanisch und elektrisch leitfähig miteinander verbunden. Durch die zumindest eine Kurzschlussverbindung werden die Schließkontakte des Schaltsystems 232 überbrückt. Zum Auftrennen der zumindest einen Kurzschlussverbindung weist der Deckel 114 zwei Durchgangslöcher 252 auf, durch die ein Werkzeug geführt werden kann, um die zumindest eine Kurzschlussverbindung aufzutrennen. Die Durchgangslöcher 252 ermöglichen ein Trennen der Leiterbahnen des Stanzgitters nachdem das Schaltmodul 102 zusammengefügt wurde und insbesondere, nachdem der Deckel 114 des Schaltmoduls montiert wurde.

Im Folgenden werden Ausführungsbeispiele des in Fig. 2 gezeigten Schaltmoduls 102 näher beschrieben.

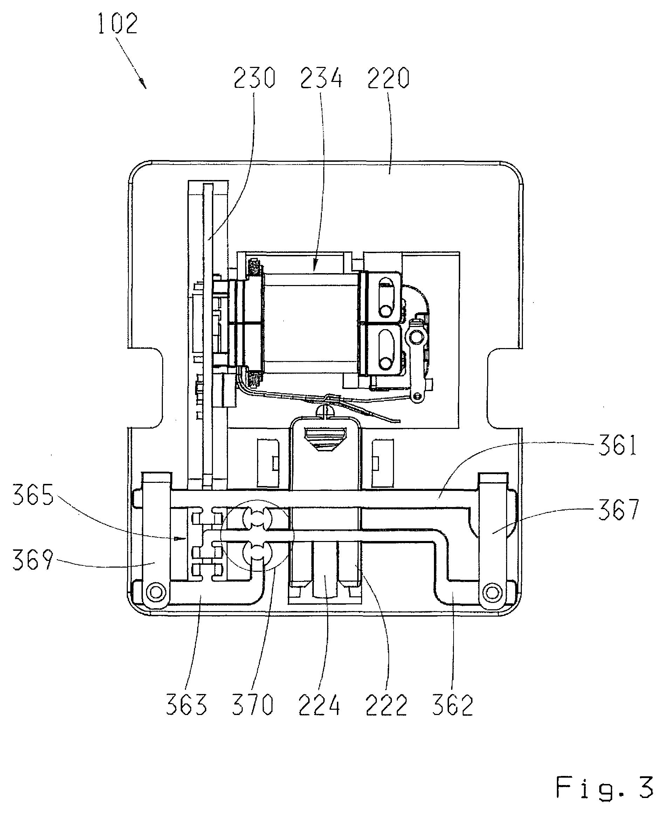

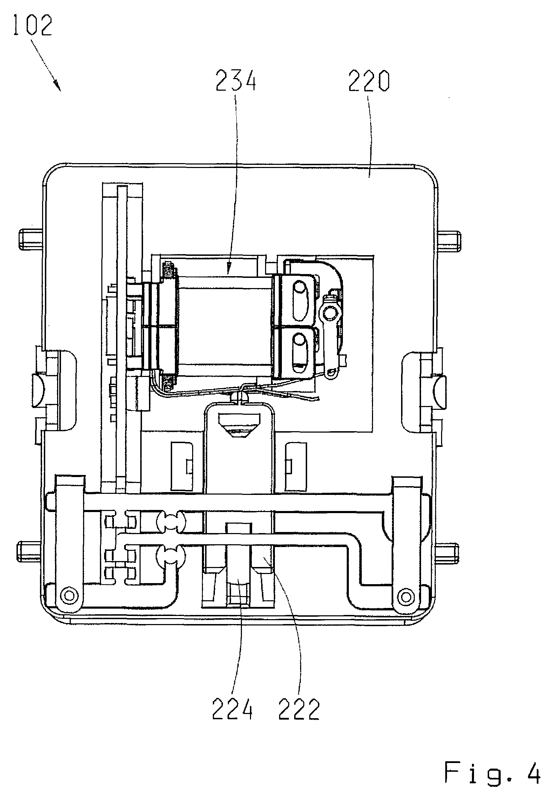

Gemäß einem Ausführungsbeispiel besteht das Schaltmodul aus dem Gehäuse 220 und dem Deckel 114, die miteinander mittels einer Schnappverbindung verrastet sind. Innerhalb vom Gehäuse 220 befindet sich der Funkmodul, welcher aus dem elektromagnetischen Energiewandler 234 und einer Funkelektronik besteht. Die Funkelektronik kann auf der Leiterplatte 230 angeordnet sein. Die Leiterplatte 230 kann eine elektrische Schnittstelle zum Schaltsystem 232 und zusätzlich oder alternativ zu einer externen Antenne haben. Eine externe Antenne kann zwar außerhalb der Leiterplatte 230 jedoch innerhalb des Schaltmoduls 102 angeordnet sein. Beispielsweise kann die Antenne zur Realisierung einer großen wirksamen Antennenfläche in oder an dem Deckel 114 oder dem Gehäuse 220 angeordnet sein. Alternativ kann eine auf der Leiterplatte 230 gedruckte Antenne verwendet werden. Das Schaltsystem 232, auch Kontaktsystem genannt, besteht aus Steckkontakten zur Kontaktierung der Leiterplatte 230, Leiterbahnen und mindestens einem Schließkontakt. Über die Steckkontakte können die Leiterbahnen des Schaltsystems 232 mit der Leiterplatte 230 elektrisch leitfähig verbunden werden. Außerdem kann auch die Antenne in das Schaltsystem 232 integriert werden. Das Schaltsystem 232 kann kostengünstig als Stanzgitter mit verbundenen Bahnen als Gesamtteil hergestellt und in das Gehäuse 220 sehr einfach eingebaut werden. Die Trennung der Leiterbahn-Verbindungen des Stanzgitters kann mit einem Werkzeug nach dem Verschnappen des Gehäuses 220 mit dem Deckel 114 erfolgen, wie es in den Figuren 3 und 4 gezeigt ist. Alternativ kann das Schaltsystem 232 auch mittels Einzelteilen, also voneinander getrennten Leiterbahnen, zusammengebaut werden.

Die Aktivierung des Generators 234 erfolgt mit dem Betätiger 222, welcher im Gehäuse 220 gleitend geführt Ist. Um die Reibkräfte, insbesondere zwischen dem Betätiger 222 und der Steuerkontur 244 zu minimieren, kann der Betätiger 222 mit der Rolle 224 bestückt werden. Alternativ kann der Betätiger 222 beispielsweise mit einer Gleitfläche ausgestattet sein. Außerdem ist eine Möglichkeit zur Aufnahme einer zusätzlichen Rückstellfeder 226, z. B. einer Druckfeder, vorgesehen.

Das Oberteil des Schaltmodules 102, insbesondere bestehend aus dem Gehäuse 220 und dem Deckel 114, ist in der Wanne 112 drehbar gelagert eingerastet und kann gekippt werden. Im Inneren der Wanne 112 befindet sich die Steuerkontur 244, welcher mechanisch mit der Rolle 224 des Betätigers 222 verbunden ist. Währen der Kippbewegung des Oberteils des Schaltmoduls 102 rollt die Rolle 224 um die Steuerkontur 244 ab und wandelt die Kippbewegung des Oberteils in eine lineare Bewegung des Betätigers 222. Der Betätiger 222 drückt aufgrund der linearen Bewegung auf einen Hilfsbetätiger des Energiewandlers 234 und aktiviert den Energiewandler 234 dadurch.

Durch eine Veränderung der Steuerkontur 244 kann der Betätigungsweg des Betätigers 222, der Schaltpunkt des Schalters und die Haptik des Schalters sehr einfach angepasst bzw. verändert werden. Durch eine Veränderung der Steuerkontur 244 kann das Schaltmodul 102 monostabil, also als selbstrückstellender Taster, oder bistabil, also als Wippschalter mit zwei Stellungen, ausgeführt werden. Die Rückstellung kann sowohl durch eine Rückstellkraft des Energiewandlers 234 als auch mit Hilfe der zusätzlichen Rückstellfeder 226 erfolgen. Bei einer ausreichenden Rückstellkraft des Energiewandlers 234 kann auf die Feder 226 verzichtet werden.

Die Wanne 112 kann im Außenbereich mit verschiedenen Befestigungselementen 242 zur leichten Montage, beispielsweise an der Grundplatte des Schalters, versehen werden.

Fig. 3 zeigt eine Darstellung eines Schaltmoduls 102 gemäß einem Ausführungsbeispiel der vorliegenden Erfindung. Bei dem Schaltmodul 102 kann es sich um das in Fig. 2 gezeigte Schaltmodul handeln, wobei das Schaltmodul 102 in Fig. 3 in einem zusammengefügten Zustand jedoch ohne Deckel und ohne Wanne gezeigt ist. Gezeigt ist das Gehäuse 220 in einer Draufsicht. In dem Gehäuse 220 ist der Betätiger 222 mit der Rolle 224 sowie das Elektronikmodul mit der Leiterplatte 230 mit Funkelektronik, dem Energiewandler 234 und Leiterbahnen 361, 362, 363, Steckkontakten 365 sowie Schließkontakten 367, 369 des Schaltsystems angeordnet.

Ein der Rolle 224 gegenüberliegender Endabschnitt des Betätigers 222 ist in Kontakt mit einem Hilfsbetätiger des Energiewandlers 234. Der Hilfsbetätiger ist durch den Betätiger 222 nicht betätigt.

Die Leiterbahnen 361, 362, 363 sind Teil eines zusammenhängenden Stanzgitters. Nach dem Einfügen des Stanzgitters in das Gehäuse 220 hat an dem durch einen Kreis gekennzeichneten Bereich eine nachträgliche Trennung 370 der Leiterbahnen 361, 362, 363 des Stanzgitters stattgefunden. Gemäß diesem Ausführungsbeispiel hat das Stanzgitter vor der Trennung 370 drei Leiterbahnen 361, 362, 363 umfasst, die über zwei Stege miteinander verbunden waren. Die Stege sind aufgetrennt worden, um eine Überbrückung der Schließkontakte 367, 369 über durch die Stege gebildete Kurzschlussverbindungen zu verhindern. Vor der Trennung 370 des Stanzgitters waren die die erste Leiterbahn 361 und die zweite Leiterbahn 362 über einen Verbindungssteg und die zweite Leiterbahn 362 und die dritte Leiterbahn 363 über einen weiteren Verbindungssteg elektrisch leitfähig miteinander verbunden.

Haupterstreckungsrichtungen der Leiterbahnen 361, 362, 363 verlaufen parallel zueinander. Jede der Leiterbahnen 361, 362, 363 ist über einen eigenen Steckkontakt 365 mit einem entsprechenden Anschluss der Leiterplatte 230 elektrisch leitfähig verbunden. Ein erster Endabschnitt der ersten Leiterbahn 361 ist mit dem einem ersten Anschluss des ersten Schließkontakt 367 und ein zweiter Endabschnitt der ersten Leiterbahn 361 ist mit einem ersten Anschluss des zweiten Schließkontakts 369 elektrisch leitfähig verbunden. Zwischen den Endabschnitten der ersten Leiterbahn 361 ist der Steckkontakt 365 der ersten Leiterbahn 361 angeordnet. Ein erster Endabschnitt der zweiten Leiterbahn 362 ist mit einem zweiten Anschluss des ersten Schließkontakts 367 und ein zweiter Endabschnitt der zweiten Leiterbahn 362 ist mit dem Steckkontakt 365 der zweiten Leiterbahn 362 verbunden. Ein erster Endabschnitt der dritten Leiterbahn 363 ist mit einem zweiten Anschluss des zweiten Schließkontakts 369 und ein zweiter Endabschnitt der dritten Leiterbahn 363 ist mit dem Steckkontakt 365 der dritten Leiterbahn 363 verbunden.

Durch ein Schließen des ersten Schließkontakts 367 werden die erste Leiterbahn 361 und die zweite Leiterbahn 362 elektrisch leitfähig miteinander verbunden. Somit kann ein Stromfluss zwischen den Steckkontakten 365 der ersten Leiterbahn 361 und der zweiten Leiterbahn 362 über den ersten Schließkontakt 367 erfolgen. Der Stromfluss über den ersten Schließkontakt 367 kann zur Kodierung eines von dem Elektronikmodul erzeugten Schaltsignals verwendet werden. Durch ein Schließen des zweiten Schließkontakts 369 werden die dritte Leiterbahn 363 und die zweite Leiterbahn 362 elektrisch leitfähig miteinander verbunden. Somit kann ein Stromfluss zwischen den Steckkontakten 365 der dritten Leiterbahn 363 und der zweiten Leiterbahn 362 über den zweiten Schließkontakt 369 erfolgen. Der Stromfluss über den zweiten Schließkontakt 369 kann zur Kodierung des von dem Elektronikmodul erzeugten Schaltsignals verwendet werden.

Gemäß einem Ausführungsbeispiel wird das Schaltmodul 102 betrieben, ohne das die Trennung 370 des Stanzgitters erfolgt ist. In diesem Fall kann ein Schließzustand der Schließkontakte 367, 369 nicht erfasst werden. Somit kann nicht zwischen Betätigungen des Schalters in unterschiedlichen Tastbereichen unterschieden werden.

Fig. 4 zeigt eine Darstellung eines Schaltmoduls 102 gemäß einem Ausführungsbeispiel der vorliegenden Erfindung. Bei dem Schaltmodul 102 kann es sich um das in Fig. 3 gezeigte Schaltmodul handeln, wobei das Schaltmodul 102 in Fig. 4 zusätzlich die Wanne 112 aufweist, in die das Gehäuse 220 eingesetzt ist. Der Betätiger 222 ist durch die Steuerkontur 244 der Wanne 112 im Vergleich zu dem in Fig. 3 gezeigten Zustand weiter in das Innere des Gehäuses 220, in Richtung des Energiewandlers 234, verschoben. In der in Fig. 4 gezeigten Position des Betätigers 222 ist der Hilfsbetätiger des Energiewandlers 234 durch den Betätiger 222 betätigt. Der Energiewandler 234 ist ausgebildet, um durch die Betätigung des Hilfsbetätigers einen elektrischen Impuls zur Erzeugung des Schaltsignals zu erzeugen. Gemäß einem Ausführungsbeispiel kann der Energiewandler 234 ausgebildet sein, um bei einem Übergang des Betätigers von der in der Fig. 4 gezeigten Position in die in Fig. 3 gezeigte Position, also bei einem Loslassen des Hilfsbetätigers einen weiteren elektrischen Impuls zur Erzeugung eines weiteren Schaltsignals zu erzeugen.

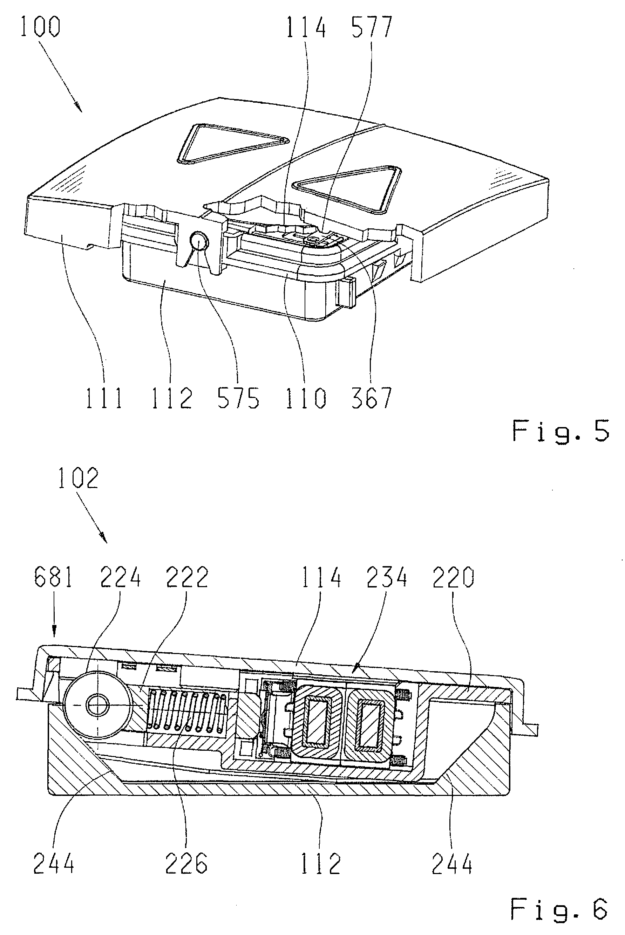

Fig. 5 zeigt eine Darstellung eines Schalters 100 gemäß einem Ausführungsbeispiel der vorliegenden Erfindung. Bei dem Schalter 100 kann es sich um den in Fig. 1 gezeigten Schalter im zusammengefügten Zustand zeigen, wobei ein beispielsweise aus der Grundplatte, dem Rahmen und dem Fixierring bestehender Grundkörper des Schalters 100 nicht gezeigt ist. Gezeigt sind die Taste 111, der Deckel 114, der Adapterrahmen 110 und die Wanne 112.

Der Adapterrahmen 110 weist einen zylinderförmigen Fortsatz zur Ausbildung eines Endabschnitts einer Drehachse 575 auf, um die die Taste 111, wie anhand von Fig. 1 beschrieben, eine Kippbewegung gegenüber dem Adapterrahmen 110 ausführen kann. Die Taste 111 weist eine Rasteinrichtung mit einer runden Öffnung auf, die in den Fortsatz des Adapterrahmens 110 eingerastet ist, um die Taste 111 um die Drehachse 575 drehbar an dem Adapterrahmen 110 zu befestigen.

Gezeigt ist der erste Schließkontakt 367 des Schaltmoduls 102, der mittels einer Betätigungsnoppe 577 der Taste 111 durch eine Durchgangsöffnung des Deckels 114 hindurch betätigt werden kann. Die Betätigungsnoppe 577 ist auf einer dem Schaltmodul 102 zugewandten Oberfläche der Taste 111 angeordnet.

Fig. 6 zeigt eine Querschnittsdarstellung eines Schaltmoduls 102 gemäß einem Ausführungsbeispiel der vorliegenden Erfindung. Gezeigt ist die Wanne 112 mit zwei gegenüberliegenden Steuerkonturen 244, das in der Wanne 112 angeordnete Gehäuse 220 mit dem Betätiger 222, der Rolle 224 und der Feder 226 und dem Energiewandler 234 und der das Gehäuse 220 überspannende Deckel 114.

Im Bereich der Steuerkonturen 244 weist die Wanne 112 aufgrund der Steuerkonturen 244 eine sich über die Höhe der Wanne 112 veränderliche Wandstärke auf. Die Steuerkonturen 244 sind als Rampen realisiert, die ausgehend von einem Boden der Wanne 112 in Richtung einer Oberkante der Wand der Wanne 112 ansteigend ausgeführt sind. Auf diese Weise verringert sich ein Innendurchmesser der Wanne 112 im Bereich der Steuerkonturen 244 in Richtung des Bodens der Wanne 112. Der Boden der Wanne ist im montierten Zustand der Grundplatte des Schalters zugewandt.

Gemäß diesem Ausführungsbeispiel sind die Steuerkonturen 244 symmetrisch ausgeführt. Dadurch kann das Gehäuse 220 auch um 180° gedreht in die Wanne 112 eingesetzt werden. Alternativ kann nur eine Steuerkontur 244 vorgesehen sein. Bei nur einer Steuerkontur 244 ist das Gehäuse 220 so in die Wanne 112 einzusetzen, dass die Rolle 224 des Betätigers 222 der einzigen Steuerkontur 244 zugewandt ist.

Gemäß einem alternativen Ausführungsbeispiel sind die Steuerkonturen 244 unsymmetrisch ausgeführt. Dadurch können unterschiedliche Schaltcharakteristiken des Schalters allein dadurch realisiert werden, dass das Gehäuse 220 um 180° gedreht in die Wanne 112 eingesetzt wird.

Das Schaltmodul 102 ist in einer Ruheposition gezeigt, in der das Gehäuse so gekippt ist, dass sich die Rolle 224 an einer ersten Position der Steuerkontur 244 befindet, die dem Boden der Wanne 112 abgewandt ist. Gezeigt ist eine Betätigungskraft 681, die auf den Deckel 114 wirkt. Im verbauten Zustand des Schaltmoduls 102 kann die Betätigungskraft 681 über die Taste des Schalters auf den Deckel 114 übertragen werden. Die Betätigungskraft 681 wirkt in Richtung der Wanne 112. Durch die Betätigungskraft 681 wird der Deckel 114 zusammen mit dem Gehäuse 220 gekippt. Während der Kippbewegung des Gehäuses 220 bewegt sich die Rolle 224 entlang der Steuerkontur 244 in Richtung einer zweiten Position der Steuerkontur 244, die dem Boden der Wanne 112 zugewandt ist. Dadurch wird der Betätiger 222 in Richtung des Energiewandlers 234 bewegt und die Feder 226, die hier als Spiralfeder ausgeführt ist, wird zusammengedrückt und dadurch gespannt.

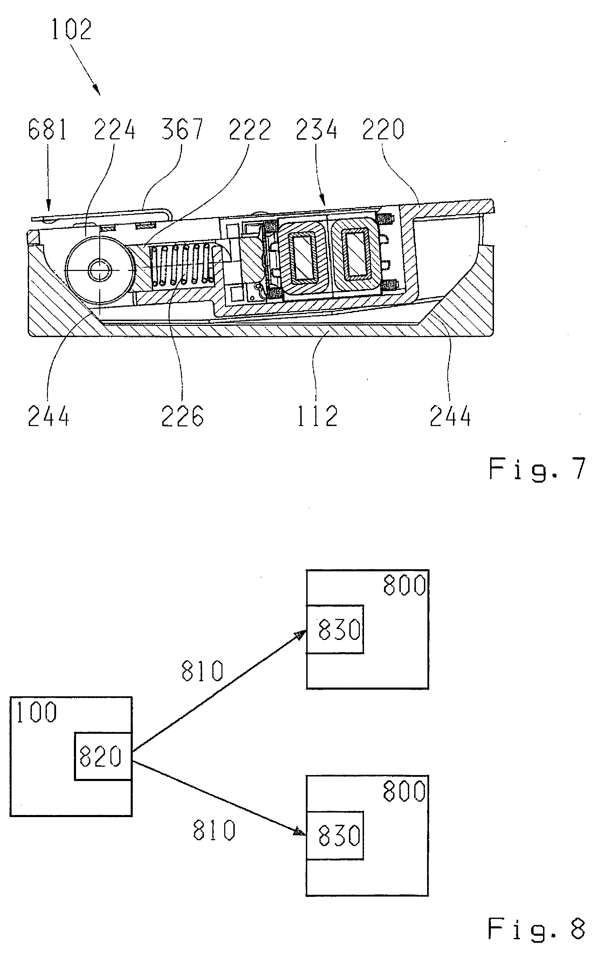

Fig. 7 zeigt eine Querschnittsdarstellung eines Schaltmoduls 102 gemäß einem Ausführungsbeispiel der vorliegenden Erfindung. Entsprechend zu Fig. 6 ist die Wanne 112 mit zwei gegenüberliegenden Steuerkonturen 244, das in der Wanne 112 angeordnete Gehäuse 220 mit dem Betätiger 222, der Rolle 224 und der Feder 226 und dem Energiewandler 234 gezeigt. Der Deckel ist nicht gezeigt. Dafür ist der erste Schließkontakt 681 gezeigt.

Das Schaltmodul 102 ist in einer Betätigungsposition gezeigt, in der das Gehäuse 220 so gekippt ist, dass sich die Rolle 224 an der zweiten Position der Steuerkontur 244 befindet, die dem Boden der Wanne 112 zugewandt ist. Das Gehäuse 220 wurde durch den Einfluss der Betätigungskraft 681, ausgehend von der in Fig. 6 gezeigten Stellung, in die in Fig. 7 gezeigte Stellung gekippt. Aufgrund des fortbestehenden Einfluss der Betätigungskraft 681 wird das Gehäuse 220 entgegen der Rückstellkraft der Feder 226 in der in Fig. 7 gezeigten Stellung gehalten.

Der erste Schließkontakt ist in einer geöffneten Position gezeigt, da die Betätigungskraft 681 nicht auf den ersten Schließkontakt wirkt.

Im Folgenden werden anhand der Figuren 1 bis 8 Ausführungsbeispiele der vorliegenden Erfindung zusammenfassend beschrieben. Das Schaltmodul 102, auch Schubmodul genannt, ist als ein Multifunktions-Funkschalter konzipiert und kann beispielsweise bei als Doppeltaster mit einer Taste 111, als Doppeltaster mit einer Doppeltaste 111 oder Mehrfachtaste 111, als Einfachtaster mit einer Taste 111 oder als Einfach-Wippschalter mit einer Taste 111 zum Einsatz kommen.

Gemäß dem Ausführungsbeispiel als Doppeltaster mit einer Taste 111 ist der Schalter 100 als Doppelschalter, z. B für zwei Lampen, oder als Jalousieschalter mit Rauf- Runter-Funktion ausgeführt. Die Funktionsweise eines solchen Doppeltaster ist folgendermaßen. Die Taste 111 ist mittels des Adapterrahmens 110 drehbar gelagert und kann geringe Drehbewegungen in der Achse 575, welche quer zu der Wippachse 221 des Schalters 100 liegt, absolvieren. Bei einer Betätigung der Taste 111 z. B. auf der in Fig. 5 gezeigten rechten Seiten, macht die Taste 111 vorerst eine Drehbewegung quer zu der Wipp-Bewegung und drückt mit dem Betätigungsnoppen 577 auf den rechten Schließkontakt 367 und betätigt den rechten Schließkontakt 367 dadurch. Die erforderliche Kraft zur Betätigung des Schließkontakts 367 ist sehr gering und ist um ein Faktor "X" kleiner als die Gesamtbetätigungskraft 681 des Schalters 100, beispielsweise in Form eines Lichtschalters.

Während der weiteren Betätigung bleibt die Taste 111 nach rechts leicht gekippt und der erste Schließkontakt 367 bleibt geschlossen. Ab jetzt kann die Taste 111 nicht mehr weiter nach rechts kippen, da der Kippweg begrenzt ist. Dadurch macht die Taste 111 eine größere Wippbewegung um die Wippachse 221 als eine horizontale Achse. Dabei rollt die Rolle 224 des Betätigers 222 um die Steuerkontur 244 und wandelt die Wippbewegung in die lineare Bewegung des Betätigers 222, wie es in den Figuren 6 und 7 gezeigt ist. Bei einem bestimmten Winkel der Wippbewegung ist der Generator 234 aktiviert und versorgt die Sendeelektronik 230 mit der Energie. Die Sendeelektronik 230 ist ausgebildet, um abzufragen, welcher Kodierkontakt 367, 369 derzeit geschlossen ist und kodiert das von dem Schaltmodul 102 auszusendende Signal, z. B. als ein Einschaltsignal für die Lampe Nr. 1 oder z. B. als Steuersignal "Jalousie hochfahren". Gleichzeitig können mit dem Signal auch weitere Funktionen beim Empfänger, wie z. B. eine Dimmer-Funktion, gestartet werden.

Beim Loslassen der Taste 111 schaltet der Schalter 100 als ein Taster von selbst zurück. Der Schalter 100 ist also monostabil. Die Sendeeinheit 230 ist ausgebildet, um ein weiteres Funksignal zu generieren und kodiert das auszusendende Signal z. B. als "Stoppsignal" für eine bereits gestartete Funktion, z. B. "Dimmer aus" oder "Jalousiemotor stopp".

Gemäß einem Ausführungsbeispiel wird bei einer nächsten Betätigung des Schalters 100 als auszusendendes Signal ein kodiertes Ausschaltsignal für die entsprechende Lampe versendet.

Bei der Betätigung der Taste 111 auf der in Fig. 5 gezeigten linken Seite erfolgt entsprechend zur der Betätigung der Taste 111 auf der rechten Seite, ein gleicher Vorgang mit dem Unterschied, dass der zweite Kodierkontakt 369 geschlossen wird und als auszusendendes Signal ein kodiertes Funksignal für einen zweiten Verbraucher versendet wird.

Die Einzeltaste 111 für den Doppelschalter 100 bietet parallel zur Kostenersparnis auch einen Designvorteil und kann mit verschiedenen Symbolen ausgestattet werden.

Gemäß dem Ausführungsbeispiel als Doppeltaster mit einer Doppeltaste oder Mehrfachtaste wird der Schalter 100 mit geteilten Doppeltasten oder geteilten Mehrfachtasten konzipiert werden. Die geteilten Tasten 111 können in diesem Fall auf dem Adapterrahmen 110 drehbar oder schwimmend gelagert sein. Unter jede Taste 111 befindet sich ein entsprechender Kodierkontakt 367, 369 bzw. zwei oder mehr Kodierkontakte 367, 369. Die Schaltiogik 232 bleibt wie beim Doppelschalter mit einer Taste 111.

Dies bedeutet, das vorerst durch eine kurze Tastenbewegung ein entsprechender der Kodierkontakte 367, 369 geschlossen wird und bei einer weiteren Betätigung die Funkeinheit 230 aktiviert und ein entsprechend kodiertes Funksignal als auszusendendes Signal versendet wird. Das System funktioniert als ein selbstrückstellender Mehrfach-Taster 100, ist also monostabil.

Gemäß dem Ausführungsbeispiel als Einfachtaster mit einer Taste kann der Einfachschalter 100 so realisiert werden, dass bei der Montage der Taste 111 auf dem Schaltmodul 102 beide Kodierkontakte 367, 369 geschlossen werden. Dabei wird immer das gleiche Funksignal als Schaltsignal versendet.

In einer kostengünstigeren Variante kann das Kontaktsystem 232 ganz entfallen, da keine Multifunktion mehr erforderlich ist.

Die Dimmerfunktion ist realisierbar und kann durch Loslassen des Schalters 100 gesteuert werden. Der Taster stellt sich selbstständig zurück, ist also monostabil.

Gemäß dem Ausführungsbeispiel als Einfach-Wippschalter mit einer Taste 111 kann das Schaltmodul 102 durch eine Veränderung der Steuerkontur 244 bzw. durch eine Veränderung des Energiewandlers 234 nicht selbstrückstellend ausgeführt werden, ist also bistabil. Die durch das Gehäuse 220 gebildete Wippe nimmt eine der beiden möglichen Stellungen an, wie sie in den Figuren 6 und 7 gezeigt sind. Für das Zurückschalten muss die Wipptaste in Form des Gehäuses 220 in die jeweils andere Position gedrückt werden. Dazu ist eine weitere Betätigungskraft erforderlich, die auf Seite des Schaltmoduls 102 angreift, die der in den Figuren 6 und 7 gezeigten Betätigungskraft 681 gegenüberliegt. Der Vorteil liegt in der geringeren Betätigungskraft 681, die zur Betätigung des Schalters 100 erforderlich ist.

Die Dimmerfunktion kann z. B. durch das Rückschalten des Wippschalters 100 oder durch eine zweite Betätigung des Schalters 100 innerhalb eines Zeitfensters realisiert werden.

Fig. 8 zeigt ein System mit einem Schalter 100 und zwei Vorrichtungen 800, gemäß einem Ausführungsbeispiel der vorliegenden Erfindung. Der Schalter 100 und die Vorrichtungen 800 sind über eine drahtlose Verbindung, beispielsweise eine Funkverbindung miteinander verbunden. Der Schalter 100 stellt einen Sender dar, der ausgebildet ist, um ein Schaltsignal 810 auszusenden. Dazu weist der Schalter 100 eine Antenne 820 auf. Die Vorrichtungen 800 stellen Empfänger dar, die jeweils ausgebildet sind, um das Schaltsignal 810 zu empfangen. Dazu weisen die Vorrichtungen 800 jeweils eine weitere Antenne 830 auf.

Bei dem Schalter 100 kann es sich um einen an Hand der vorangegangenen Figuren beschriebenen Schalter handeln, der ausgebildet ist, um bei einer Betätigung des Schalters das Schaltsignal 810 in einer ersten Form auszusenden und bei einer Rückstellung des Schalters 100 das Schaltsignal 810 in einer zweiten Form auszusenden. Ist der Schalter 100 für unterschiedliche Schaltoptionen ausgelegt, weißt also beispielsweise einen oder mehrere Schließkontakte auf, so kann der Schalter 100 ausgebildet sein, um das Schaltsignal 810 in weiteren unterschiedlichen Formen auszusenden, um jeweils eine beim Betätigen des Schalters 100 ausgewählte Betätigungsform über das Schaltsignal 810 anzeigen zu können. Die unterschiedlichen Formen des Schaltsignals können beispielsweise durch unterschiedliche Kodierungen oder unterschiedliche übertragene Daten realisiert sein.

Bei den Vorrichtung 800 kann es sich um elektrische Geräte handeln, die jeweils eine Mehrzahl von unterschiedlichen Zuständen zwischen einem ersten Endzustand und einem zweiten Endzustand einnehmen können. Gemäß diesem Ausführungsbeispiel handelt es sich bei den Vorrichtungen 800 jeweils um Lampen, die zwischen einem ausgeschalteten Zustand und einem eingeschalteten Zustand mit maximaler Leuchtstärke, weitere Zustände mit jeweils geringeren als der maximalen Leuchtstärke einnehmen können. Es kann sich bei den Vorrichtungen 800 somit um Lampen mit einer Dimm-Funktion handeln.

Die Vorrichtungen 800 sind ausgebildet, um ansprechend auf einen Empfang des Schaltsignals 810 in der ersten Form einen ersten Endzustand einzunehmen, sich beispielsweise auf die maximale Leuchtstärke einzustellen. Zusätzlich können die Vorrichtungen 800 ausgebildet sein, um nach Einnahme des ersten Endzustands mit einem fließenden Übergang in den zweiten Endzustand, beispielsweise den ausgeschalteten Zustand, zu beginnen. Der fließende Übergang kann entweder durch Erreichen des zweiten Endzustands oder ansprechend auf einen Empfang des Schaltsignals 810 in der zweiten Form beendet werden.

Weist der Schalter 100 beispielsweise zwei Schaltoptionen auf, zwischen denen ein Benutzer bei der Betätigung des Schalters 100 auswählen kann, so können die beiden Vorrichtungen 800 auch getrennt voneinander angesteuert werden.

Auch können unterschiedliche Schaltoptionen eingesetzt werden, um den beschriebenen fließenden Übergang in entgegengesetzter Richtung ausführen zu können.

Die in Fig. 8 gezeigte Anzahl der Vorrichtungen 800 ist lediglich beispielhaft gewählt. Auch kann es sich bei den Vorrichtungen 800 um andere elektrische Geräte, beispielsweise elektrisch angetriebene Jalousien handeln.

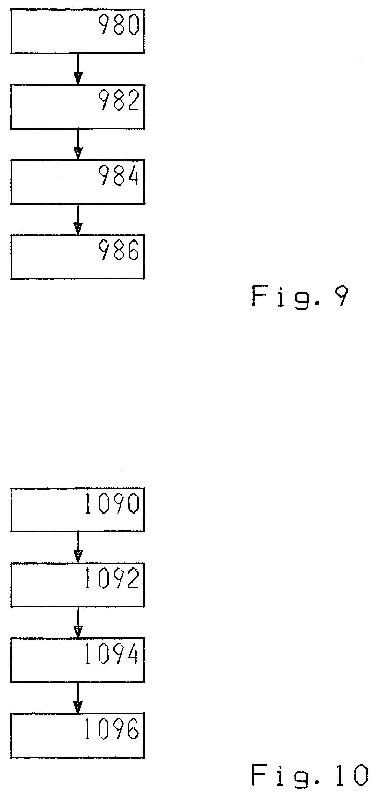

Fig. 9 zeigt ein Ablaufdiagramm eines Verfahrens zum Steuern einer Vorrichtung mittels eines Schaltsignals eines Schalters gemäß einem Ausführungsbeispiel der vorliegenden Erfindung. Bei dem Schalter kann es sich um den in Fig. 8 gezeigten Schalter und bei der Vorrichtung um eine der in Fig. 8 gezeigten Vorrichtungen handeln. Die Schritte des Verfahrens können beispielsweise von einem Steuergerät der Vorrichtung ausgeführt werden.

In einem Schritt 980 wird das Schaltsignal über eine Schnittstelle empfangen. Bei der Schnittstelle kann es sich beispielsweise um die in Fig. 8 gezeigte weitere Antenne oder um einen Eingang des Steuergeräts handeln.

In einem Schritt 982 wird das Schaltsignal ausgewertet. Insbesondere wird bestimmt, welche Schaltbewegung des Schalters das Schaltsignal anzeigt und gegebenenfalls, welche Schaltoption das Schaltsignal anzeigt.

In einem Schritt 984 wird, wenn das Schaltsignal eine erste vorbestimmte Schaltbewegung des Schalters anzeigt, ein Startsignal zum Starten eines fließenden Übergangs von einem aktuellen Zustand der Vorrichtung zu einem Endzustand der Vorrichtung erzeugt. Der aktuelle Zustand kann einem Zustand entsprechen, den die Vorrichtung vor dem Empfangen des Schaltsignals bereits inne hatte oder einem Zustand, den die Vorrichtung ansprechend auf das Empfangen des Schaltsignals eingenommen hat.

In einem Schritt 986 wird, wenn das Schaltsignal eine zweite vorbestimmte Schaltbewegung des Schalters anzeigt, ein Stoppsignal zum Beenden des fließenden Übergangs zu dem Endzustand der Vorrichtung erzeugt. Bei der zweiten vorbestimmten Schaltbewegung kann es sich um eine Rückstellbewegung handeln, durch die der Schalter in einen Ausgangszustand zurückgesetzt wird, den der Schalter vor Ausführung der ersten vorbestimmten Schaltbewegung innehatte.

Fig. 10 zeigt ein Ablaufdiagramm eines Verfahrens zum Anzeigen einer Betätigung eines Schalters gemäß einem Ausführungsbeispiel der vorliegenden Erfindung. Bei dem Schalter kann es sich beispielsweise um den anhand von Fig. 1 beschriebenen Schalter handeln, der eine zu betätigende Taste aufweist, die beweglich an einem bewegbar angeordneten Gehäuse des Schalters befestigt ist.

In einem Schritt 1090 wird eine Relativbewegung zwischen der Taste und dem Gehäuse erkannt. In einem Schritt 1092 wird ansprechend auf eine Synchronbewegung zwischen der Taste und dem Gehäuse ein elektrischer Impuls bereitgestellt. In einem Schritt 1094 wird basierend auf dem im Schritt 1092 bereitgestellten elektrischen Impuls und basierend auf der im Schritt 1090 erkannten Relativbewegung ein Schaltsignal erzeugt. Das Schaltsignal kann in einem Schritt 1096, beispielsweise über eine Antenne, ausgesendet werden, um die Betätigung des Schalters anzuzeigen. Zur Ausführung der Schritte 1090, 1092, 1094, 1096 kann der Schalter geeignete Einrichtungen, insbesondere eine oder mehrere elektrische Schaltungen aufweisen, die ausgebildet sind, um die Schritte 1090, 1092, 1094, 1096 umzusetzen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

### Bezugszeichen

- 100: Schalter
- 102: Schaltmodul
- 104: Grundplatte
- 106: Rahmen
- 108: Fixierring
- 110: Adapterrahmen
- 111: Taste
- 112: Wanne
- 114: Deckel
- 220: Gehäuse
- 221: Kippachse
- 222: Betätiger
- 224: Rolle
- 226: Feder
- 230: Leiterplatte
- 232: Schaltsystem
- 234: Energiewandler
- 240: Aussparung
- 242: Rastnase
- 244: Steuerkontur
- 246: Anschlag
- 250: Durchgangsloch
- 252: Durchgangslöcher
- 361: erste Leiterbahn
- 362: zweite Leiterbahn
- 363: dritte Leiterbahn
- 365: Steckkontakte
- 367: erster Schließkontakt
- 369: zweiter Schließkontakt
- 370: Trennung
- 575: Drehachse
- 577: Betätigungsnoppen
- 681: Betätigungskraft
- 800: Vorrichtung
- 810: Schaltsignal
- 820: Antenne
- 830: weitere Antenne
- 980: Schritt des Empfangens
- 982: Schritt des Bestimmens
- 984: Schritt des Erzeugens
- 986: Schritt des Erzeugens
- 1090: Schritt des Erkennens
- 1092: Schritt des Bereitstellens
- 1094: Schritt des Erzeugens
- 1096: Schritt des Aussendens

## Patentansprüche

1. Schaltmodul (102) für einen Schalter (100), mit folgenden Merkmalen:
einem Gehäuse (220), das ausgebildet ist, um bei einer Betätigung des Schalters (100) eine Schaltbewegung auszuführen;
einem Betätiger (222), der in dem Gehäuse (220) angeordnet und ausgebildet ist, um bei der Schaltbewegung des Gehäuses (220) eine durch eine Steuerkontur (244) steuerbare Betätigungsbewegung auszuführen;
einem Energiewandler (234), der in dem Gehäuse (220) angeordnet ist und ausgebildet ist, um angetrieben durch die Betätigungsbewegung des Betätigers (222) einen elektrischen Impuls bereitzustellen; und
einer Schalteinheit zur Ausgabe eines auf dem elektrischen Impuls basierenden Schaltsignals (810) zur Anzeige der Schaltbewegung des Gehäuses (220).

2. Schaltmodul (102) gemäß Anspruch 1, **dadurch gekennzeichnet, dass** das Schaltmodul (102) eine Wanne (112) mit der Steuerkontur (244) aufweist, wobei das Gehäuse (220) gegenüber der Wanne (112) bewegbar angeordnet ist, um die Schaltbewegung gegenüber der Wanne (112) ausführen zu können.

3. Schaltmodul (102) gemäß einem der vorangegangenen Ansprüche, **dadurch gekennzeichnet, dass** die Schalteinheit eine Antenne oder eine Schnittstelle zur Ausgabe des Schaltsignals (810) an eine Antenne (820) aufweist.

4. Schaltmodul (102) gemäß einem der vorangegangenen Ansprüche, **dadurch gekennzeichnet, dass** die Schalteinheit zumindest einen elektrischen Schließkontakt (367) zur Ausbildung eines Drucktasters an zumindest einer Position des Gehäuses (220) aufweist, wobei die Schalteinheit ausgebildet ist, um das Schaltsignal (810) basierend auf dem elektrischen Impuls und einem Schließzustand des elektrischen Schließkontakts (367) zu erzeugen.

5. Schaltmodul (102) gemäß einem der vorangegangenen Ansprüche, **dadurch gekennzeichnet, dass** die Schalteinheit einen ersten elektrischen Schließkontakt (367) zur Ausbildung eines ersten Drucktasters an einer ersten Position des Gehäuses (220) und mindestens einen zweiten elektrischen Schließkontakt (369) zur Ausbildung eines zweiten Drucktasters an einer zweiten Position des Gehäuses (220) aufweist, wobei die Schalteinheit ausgebildet ist, um das Schaltsignal (810) basierend auf dem elektrischen Impuls und einem Schließzustand des ersten elektrischen Schließkontakts (367) und des mindestens einen zweiten elektrischen Schließkontakts (369) zu erzeugen.

6. Schaltmodul (102) gemäß Anspruch 5, mit einem Deckel (114) zum Abdecken des Gehäuses (220), wobei der Deckel (114) eine Einrichtung (250) zur Ermöglichung einer Trennung (270) einer Kurzschlussverbindung zwischen dem ersten elektrischen Schließkontakt (367) und dem mindestens einen zweiten elektrischen Schließkontakt (369) aufweist.

7. Schaltmodul (102) gemäß einem der vorangegangenen Ansprüche, **dadurch gekennzeichnet, dass** das Schaltmodul (102) ein Halteelement zum Halten zumindest einer Taste (111) des Schalters (100) aufweist, wobei das Halteelement ausgebildet ist, um eine Relativbewegung der zumindest einen Taste (111) relativ zu dem Gehäuse (220) zu ermöglichen, wenn die zumindest eine Taste (111) von dem Halteelement gehalten wird.

8. Schaltmodul (102) gemäß einem der vorangegangenen Ansprüche, **dadurch gekennzeichnet, dass** der Energiewandler (234) ausgebildet ist, um ansprechend auf eine der Betätigungsbewegung entgegengesetzten Bewegung des Betätigers (222) einen weiteren elektrischen Impuls bereitzustellen, wobei die Schalteinheit ausgebildet ist, um ein auf dem weiteren elektrischen Impuls basierendes weiteres Schaltsignal (810) zur Anzeige einer Rückstellbewegung des Gehäuses (220) zu erzeugen.

9. Verfahren zum Anzeigen einer Betätigung eines Schalters (100), wobei der Schalter (100) eine betätigbare Taste (111) aufweist, die beweglich an einem bewegbar angeordneten Gehäuse (220) des Schalters (100) befestigt ist, und wobei das Verfahren die folgenden Schritte umfasst:
Erkennen (1090) einer Relativbewegung zwischen der Taste (111) und dem Gehäuse (220);
Bereitstellen (1092) eines elektrischen Impulses ansprechend auf eine Synchronbewegung zwischen der Taste (111) und dem Gehäuse (220); und
Erzeugen (1094) eines Schaltsignals (810) basierend auf dem elektrischen Impuls und der im Schritt des Erkennens (1090) erkannten Relativbewegung, um die Betätigung des Schalters (100) anzuzeigen.

10. Schalter (100) mit folgenden Merkmalen:
einer Grundplatte (104) zur Befestigung des Schalters (100);
zumindest eine Taste (111) zur Betätigung des Schalters (100); und
einem Schaltmodul (102) gemäß einem der vorangegangenen Ansprüche, wobei
das Schaltmodul (102) zwischen der Grundplatte (104) und der zumindest einen Taste (111) angeordnet ist.

11. Verfahren zum Steuern einer Vorrichtung (900) mittels eines Schaltsignals (810) eines Schalters (100), wobei die Vorrichtung (900) eine Mehrzahl von Zuständen einnehmen kann und einen fließenden Übergang zwischen zwei Endzuständen der Mehrzahl von Zuständen ermöglicht, wobei das Verfahren die folgenden Schritte umfasst:
Empfangen (980) des Schaltsignals (810) über eine Schnittstelle, wobei das Schaltsignal (810) ein Schaltsignal (810) eines Schalters (100) gemäß Anspruch 10 repräsentiert;
Bestimmen (982), ob das Schaltsignal (810) die Schaltbewegung oder eine der Schaltbewegung entgegengesetzte Rückstellbewegung des Gehäuses (220) des Schaltmoduls (102) anzeigt;
Erzeugen (984) eines Startsignals zum Starten eines fließenden Übergangs von einem aktuellen Zustand der Mehrzahl von Zuständen der Vorrichtung zu einem der zumindest zwei Endzustände, wenn das Schaltsignal (810) die Kippbewegung anzeigt; und
Erzeugen (986) eines Stoppsignals zum Beenden des fließenden Übergangs zu dem einen der zumindest zwei Endzustände, wenn das Schaltsignal (810) die Rückstellbewegung anzeigt.

## Claims

1. Switching module (102) for a switch (100), having the following features:
a housing (220) which is designed in order to execute a switching movement when the switch (100) is operated;
an operating device (222) which is arranged in the housing (220) and is designed in order to execute an operating movement, which can be controlled by a control contour (244), during the switching movement of the housing (220);
an energy converter (234) which is arranged in the housing (220) and is designed in order to provide an electrical pulse in a manner driven by the operating movement of the operating device (222); and
a switching unit for outputting a switching signal (810), which is based on the electrical pulse, for indicating the switching movement of the housing (220).

2. Switching module (102) according to Claim 1, **characterized in that** the switching module (102) has a trough (112) with the control contour (244), wherein the housing (220) is arranged such that it can move in relation to the trough (112) in order to be able to execute the switching movement in relation to the trough (112).

3. Switching module (102) according to either of the preceding claims, **characterized in that** the switching unit has an antenna or an interface for outputting the switching signal (810) to an antenna (820).

4. Switching module (102) according to one of the preceding claims, **characterized in that** the switching unit has at least one electrical normally open contact (367) for forming a pushbutton in at least one position of the housing (220), wherein the switching unit is designed in order to generate the switching signal (810) based on the electrical pulse and a closing state of the electrical normally open contact (367).

5. Switching module (102) according to one of the preceding claims, **characterized in that** the switching unit has a first electrical normally open contact (367) for forming a first pushbutton in a first position of the housing (220) and has at least one second electrical normally open contact (369) for forming a second pushbutton in a second position of the housing (220), wherein the switching unit is designed in order to generate the switching signal (810) based on the electrical pulse and a closing state of the first electrical normally open contact (367) and of the at least one second electrical normally open contact (369).

6. Switching module (102) according to Claim 5, comprising a cover (114) for covering the housing (220), wherein the cover (114) has a device (250) for allowing a disconnection (270) of a short-circuit connection between the first electrical normally open contact (367) and the at least one second electrical normally open contact (369).

7. Switching module (102) according to one of the preceding claims, **characterized in that** the switching module (102) has a holding element for holding at least one button (111) of the switch (100), wherein the holding element is designed in order to allow a relative movement of the at least one button (111) relative to the housing (220) when the at least one button (111) is held by the holding element.

8. Switching module (102) according to one of the preceding claims, **characterized in that** the energy converter (234) is designed in order to provide a further electrical pulse in response to a movement of the operating device (222) opposite to the operating movement, wherein the switching unit is designed in order to generate a further switching signal (810), which is based on the further electrical pulse, for indicating a resetting movement of the housing (220).

9. Method for indicating operation of a switch (100), wherein the switch (100) has a button (111) which can be operated and which is mounted in a movable manner on a housing (220) of the switch (100), which housing is arranged such that it can be moved, and wherein the method comprises the following steps:
identifying (1090) a relative movement between the button (111) and the housing (220);
providing (1092) an electrical pulse in response to a synchronous movement between the button (111) and the housing (220); and
generating (1094) a switching signal (810) based on the electrical pulse and the relative movement which is identified in the identification step (1090) in order to indicate operation of the switch (100).

10. Switch (100) comprising the following features:
a base plate (104) for mounting the switch (100);
at least one button (111) for operating the switch (100); and
a switching module (102) according to one of the preceding claims,
wherein
the switching module (102) is arranged between the base plate (104) and the at least one button (111).

11. Method for controlling an apparatus (900) by means of a switching signal (810) of a switch (100), wherein the apparatus (900) can assume a plurality of states and allows a smooth transition between two end states of the plurality of states, wherein the method comprises the following steps:
receiving (980) the switching signal (810) via an interface, wherein the switching signal (810) represents a switching signal (810) of a switch (100) according to Claim 10;
determining (982) whether the switching signal (810) indicates the switching movement or a resetting movement, which is opposite to the switching movement, of the housing (220) of the switching module (102);
generating (984) a start signal for starting a smooth transition from a current state of the plurality of states of the apparatus to one of the at least two end states when the switching signal (810) indicates the tilting movement; and
generating (986) a stop signal for terminating the smooth transition to the one of the at least two end states when the switching signal (810) indicates the resetting movement.

## Revendications

1. Module de commutation (102) pour un commutateur (100), présentant les caractéristiques suivantes :
un boîtier (220) réalisé pour mettre en oeuvre un mouvement de commutation lors d'un actionnement du commutateur (100) ;
un actionneur (222) disposé dans le boîtier (220) et réalisé pour mettre en oeuvre un mouvement d'actionnement pouvant être commandé par un contour de commande (244) lors du mouvement de commutation du boîtier (220) ;
un convertisseur d'énergie (234) disposé dans le boîtier (220) et réalisé pour fournir une impulsion électrique lorsqu'il est entraîné par le mouvement d'actionnement de l'actionneur (222) ; et
une unité de commutation destinée à délivrer un signal de commutation (810) sur la base de l'impulsion électrique afin d'indiquer le mouvement de commutation du boîtier (220).

2. Module de commutation (102) selon la revendication 1, **caractérisé en ce que** le module de commutation (102) comprend une cuve (112) comportant le contour de commande (244), dans lequel le boîtier (220) est disposé de manière à être mobile par rapport à la cuve (112) afin de pouvoir effectuer le mouvement de commutation par rapport à la cuve (112).

3. Module de commutation (102) selon l'une quelconque des revendications précédentes, **caractérisé en ce que** l'unité de commutation comprend une antenne ou une interface destinée à délivrer le signal de commutation (810) à une antenne (820).

4. Module de commutation (102) selon l'une quelconque des revendications précédentes, **caractérisé en ce que** l'unité de commutation comprend au moins un contact de fermeture électrique (367) destiné à réaliser un bouton-poussoir à au moins une position du boîtier (220), dans lequel l'unité de commutation est réalisée pour générer le signal de commutation (810) sur la base de l'impulsion électrique et d'un état de fermeture du contact de fermeture électrique (367).

5. Module de commutation (102) selon l'une quelconque des revendications précédentes, **caractérisé en ce que** l'unité de commutation comprend un premier contact de fermeture électrique (367) destiné à réaliser un premier bouton-poussoir à une première position du boîtier (220) et au moins un second contact de fermeture électrique (369) destiné à réaliser un second bouton-poussoir à une seconde position du boîtier (220), dans lequel l'unité de commutation est réalisée pour générer le signal de commutation (810) sur la base de l'impulsion électrique et d'un état de fermeture du premier contact de fermeture électrique (367) et de l'au moins un second contact de fermeture électrique (369).

6. Module de commutation (102) selon la revendication 5, comportant un couvercle (114) destiné à refermer le boîtier (220), dans lequel le couvercle (114) comprend un dispositif (250) permettant de séparer (270) une connexion de court-circuit entre le premier contact de fermeture électrique (367) et l'au moins un second contact de fermeture électrique (369).

7. Module de commutation (102) selon l'une quelconque des revendications précédentes, **caractérisé en ce que** le module de commutation (102) comprend un module de maintien destiné à maintenir au moins un bouton (111) du commutateur (100), dans lequel l'élément de maintien est réalisé pour permettre un mouvement relatif de l'au moins un bouton (111) par rapport au boîtier (220) lorsque l'au moins un bouton (111) est maintenu par l'élément de maintien.

8. Module de commutation (102) selon l'une quelconque des revendications précédentes, **caractérisé en ce que** le convertisseur d'énergie (234) est réalisé pour fournir une autre impulsion électrique en réponse à un mouvement de l'actionneur (222) en sens opposé au mouvement d'actionnement, dans lequel l'unité de commutation est réalisée pour générer un autre signal de commutation (810) sur la base de l'autre impulsion électrique afin d'indiquer un mouvement de retour du boîtier (220).

9. Procédé destiné à indiquer un actionnement d'un commutateur (100), dans lequel le commutateur (100) comprend un bouton pouvant être actionné (111) qui est fixé de manière mobile sur un boîtier (220) du commutateur (100), et dans lequel le procédé comprend les étapes consistant à :
détecter (1090) un mouvement relatif entre le bouton (111) et le boîtier (220) ;
fournir (1092) une impulsion électrique en réponse à un mouvement synchrone entre le bouton (111) et le boîtier (220) ; et
générer (1094) un signal de commutation (810) sur la base de l'impulsion électrique et du mouvement relatif détecté lors de l'étape de détection (1090), afin d'indiquer l'actionnement du commutateur (100).

10. Commutateur (100) présentant les caractéristiques suivantes :
une plaque de base (104) destinée à fixer le commutateur (100) ;
au moins un bouton (111) destiné à actionner le commutateur (100) ; et
un module de commutation (102) selon l'une quelconque des revendications précédentes, dans lequel le module de commutation (102) est disposé entre la plaque de base (104) et l'au moins un bouton (111).

11. Procédé de commande d'un dispositif (900) au moyen d'un signal de commutation (810) d'un commutateur (100), dans lequel le dispositif (900) peut passer dans une pluralité d'états et permet un passage en douceur entre deux états finaux de la pluralité d'états, dans lequel le procédé comprend les étapes consistant à :
recevoir (980) le signal de commutation (810) par l'intermédiaire d'une interface, dans lequel le signal de commutation (810) représente un signal de commutation (810) d'un commutateur (100) selon la revendication 10 ;
déterminer (982) si le signal de commutation (810) indique le mouvement de commutation ou un mouvement de retour en sens opposé au mouvement de commutation du boîtier (220) du module de commutation (102) ;
générer (984) un signal de déclenchement pour déclencher une transition en douceur d'un état présent de la pluralité d'états du dispositif à l'un des au moins deux états finaux lorsque le signal de commutation (810) indique le mouvement de basculement ; et
générer (986) un signal d'arrêt pour interrompre la transition en douceur à l'un des au moins deux états finaux lorsque le signal de commutation (810) indique le mouvement de retour.
